# EUROPÄISCHE PATENTSCHRIFT

(11) **EP 2 714 243 B1**
(45) Veröffentlichungstag und Bekanntmachung des Hinweises auf die Patenterteilung: **14.09.2016**
(21) Anmeldenummer: 12706525.8
(22) Anmeldetag: 21.02.2012
(51) Int. Cl.: B01D 53/14, C10L 3/10

(54) **ANLAGE UND VERFAHREN ZUR AUFBEREITUNG VON METHANHALTIGEN NATURGAS**
SYSTEM AND METHOD FOR TREATING NATURAL GAS THAT CONTAINS METHANE
INSTALLATION ET PROCÉDÉ DESTINÉS AU TRAITEMENT DE GAZ NATUREL CONTENANT DU MÉTHANE

(30) Priorität: 31.05.2011 DE 102011102923
(43) Veröffentlichungstag der Anmeldung: 09.04.2014
(73) Patentinhaber: Ingenieurbüro Buse GmbH, 21423 Winsen/Luhe (DE)
(72) Erfinder: BUSE, Gerhard, 21423 Winsen/Luhe (DE)
(74) Vertreter: Glawe, Delfs, Moll
(86) Internationale Anmeldenummer: PCT/EP2012/052956
(87) Internationale Veröffentlichungsnummer: WO 2012/163554

(56) Entgegenhaltungen:
- EP-A1- 0 252 169
- WO-A2-2010/014774
- US-A1- 2010 037 772
- US-B1- 6 228 145

## Beschreibung

Naturgas umfasst Erd- und Biogas. Erdgas und Biogas dienen hauptsächlich der Beheizung von Wohn- und Gewerberäumen, zur Stromerzeugung und werden unter anderem auch als Treibstoff für Kraftfahrzeuge verwendet. So wird in weiten Teilen Europas heute brennbares Gas zur Energiegewinnung mit sogenannten Biogasanlagen produziert. In Biogas sind üblicherweise neben dem Energieträger Methan (CH₄) auch noch große störende Anteile an anderen Gasen enthalten, insbesondere Kohlendioxid (CO₂) und Schwefelwasserstoff (H₂S). Der Methangehalt von Biogas liegt üblicher Weise bei 50 - 60%. Die restlichen 40 - 50% setzen sich aus unerwünschten Gasen zusammen. Auch bei Erdgas handelt es sich um ein Gasgemisch, dessen Hauptbestandteil Methan abhängig von den Erdgaslagerstätten üblicherweise bei 65% bis 99% liegt und als unerwünschte Nebenbestandteile ebenfalls bis zu 35% Schwefelwasserstoff und bis zu 10% Kohlendioxid aufweist.

Die mit einem hohen Anteil an Schwefelwasserstoff und/oder Kohlendioxid belasteten Naturgase, auch als sogenannte "Sauergase" bezeichnet, müssen aus verschiedensten Gründen von Schwefelwasserstoff und Kohlendioxid gereinigt werden. Bereits Kohlendioxidkonzentrationen über 5% in der eingeatmeten Luft führen beim Menschen zu Atemnot und Bewusstlosigkeit. Mehr als 8% Kohlendioxid in der Atemluft führen bereits innerhalb einer halben bis vollen Stunde zum Tod. Neben der toxischen Wirkung des Kohlendioxids ist ebenfalls bekannt, dass der Schwefelwasserstoff im Sauergas, insbesondere in Kombination mit Wasser, die Gaspipelines angreift und diese durch Hydratbildung verstopft.

Schwefelwasserstoff (H₂S) ist des Weiteren unerwünscht, weil bei der Verbrennung des Naturgases schwefelhaltige Ablagerungen entstehen können. Kohlendioxid (CO₂) ist bereits vollständig oxidiert und vermindert den Brennwert des Gases bezogen auf das Gasvolumen.

Naturgas, sowohl Erd- als auch Biogas, kann mittels Blockheizkraftwerken (Gasmotoren mit Stromgeneratoren) verwertet werden. Ein Blockheizkraftwerk ist allerdings nur effizient, wenn die Abwärme des Motors sinnvoll genutzt werden kann. Das ist der Fall, wenn beispielsweise neben einer Biogasanlage mit Blockheizkraftwerk z.B. ein Schwimmbad oder eine Gärtnerei beheizt werden kann, aber das ist in den seltensten Fällen möglich.

Eine sinnvolle Verwertung des Biogases wäre die Einspeisung in das bereits bestehende Erdgasnetz. Um das Biogas in Erdgasnetze einspeisen zu dürfen, muss aber der Methangehalt größer als 95% sein. Daher hat gewöhnliches Biogas den Nachteil, dass es aufgrund seines hohen Gehaltes an unerwünschten Gasen, wie beispielsweise Schwefelwasserstoff (H₂S) und Kohlendioxid (CO₂), zur Einspeisung in Erdgasnetze ungeeignet ist. Gleiches gilt auch für Sauergas aus Erdgasvorkommen, dem zunächst die unerwünschten Nebenbestandteile wie Kohlendioxid Schwefelwasserstoff oder auch größere Mengen an Stickstoff entzogen werden müssen, bevor das verbleibende Gasgemisch, das überwiegend aus Methan besteht, in das Gasversorgungsnetz eingespeist werden kann.

Das Entgasen von Flüssigkeiten mit Hilfe von Membrantechnik ist im Stand der Technik ebenfalls bekannt, wie beispielsweise bei der Erzeugung von Kesselspeisewasser oder höherwertigerem Reinstwasser für die Pharma- oder Halbleitertechnik, oder beispielsweise bei der Entgasung von Hydraulikflüssigkeiten. Ein Beispiel für eine derartige Anwendung einer Entgasung von Flüssigkeiten an Membranen ist in WO 98/48175 beschrieben.

Anlagen und Verfahren zur Aufbereitung von Biogas sind im Stand der Technik bekannt. Ein Beispiel einer solchen Anlage ist in EP 1 726 352 A1 beschrieben, welche eine Anlage und Verfahren offenbart, bei dem Biogas oder Faulgas einem Trocknungsprozess und einem Entschwefelungsprozess unterworfen wird. Die Anlage weist dazu eine Gastrocknereinheit und eine Entschwefelungseinheit auf. Während des Trocknungsprozesses wird dem Biogas Wärmeenergie entzogen, die dann dem Entschwefelungsprozess zugeführt werden kann. In diesem Verfahren wird der Trocknungsprozess mit Hilfe eines Kältemittels durchgeführt. Der Entschwefelungsprozess wird hier mit Hilfe von Bakterien durchgeführt. Ein Nachteil dieses bekannten Verfahrens ist der Bedarf an Kältemittel sowie an Bakterien, die dazu geeignet sind, die Entschwefelung des Biogases zu bewirken.

Ein weiteres im Stand der Technik bekannte Verfahren zur Reinigung von Biogas ist die Druckwasserwäsche (Zeitschrift Energy 2.0, Juni 2008). Verfahren auf der Basis der Druckwasserwäsche beruhen auf dem Prinzip unterschiedlich hoher Löslichkeiten von CO₂ und Methan. Als Waschflüssigkeit dient Wasser, das in einer Absorptionskolonne das CO₂ bei Überdruck löst, wobei die Löslichkeit bei hohem Druck und niedriger Temperatur am höchsten ist. Das in Schweden bereits großtechnisch etablierte Waschverfahren macht sich die ähnlichen Charakteristika hinsichtlich der Löslichkeit von CO₂ und Schwefelwasserstoff zunutze. Beide Bestandteile des Roh-Biogases werden zeitgleich abgetrennt, was zwar einerseits eine Vorreinigung des Gases unnötig macht, dafür jedoch eine abschließende Reinigung des schwefelbelasteten CO₂-Abgases erfordert. Dies gelingt beispielsweise mit Biofiltern, die das Abgas aufbereiten. Das Waschwasser selbst wird in einer nachgeschalteten Desorptionskolonne wieder regeneriert und steht dem Verfahren erneut zur Verfügung.

Weiterhin sind im Stand der Technik Verfahren zur Aufbereitung von Biogas mit Hilfe der sogenannten Druckwechseladsorption bekannt (Englisch "Pressure Swing Adsorption", PSA-Verfahren). Ein Beispiel eines PSA-Verfahrens ist in EP 0 512 170 A1 offenbart. Derartige Verfahren sind Trockenmembranverfahren, die sich die Adsorption von Gasen an einem molekularen Sieb zu nutze machen, wobei derartige Verfahren den Nachteil haben, dass sie mit hohen Drucken arbeiten müssen. Ein PSA-Verfahren zur Aufbereitung von Biogas ist auch in der Zeitschrift Energy 2.0, Juni 2008 beschrieben. Bei einem derartigen PSA-Verfahren wird ein Gas, beispielsweise CO₂, aus einem Gasgemisch mit Hilfe eines molekularen Siebes abgetrennt. Der Überdruck bindet das CO₂ an ein Molekularsieb bis eine Sättigung erreicht wird. Überschüssiges Gasgemisch, z.B. Rohbiogas, kann dann zu einem nächsten Molekularsieb strömen. Eine solche Anlage hat den Nachteil, dass sie mit hohen Drucken arbeiten muss, um das Gasgemisch, z.B. Biogas, aufzubereiten.

Die Schrift WO 2010/014774 A2 offenbart eine Vorrichtung gemäß dem Oberbegriff von Anspruch 1 und ein entsprechendes Verfahren. Es ist daher die Aufgabe der vorliegenden Erfindung, eine Anlage zur Aufbereitung von methanhaltigen Naturgas, insbesondere Erd- und Biogas zur Verfügung zu stellen, die die oben beschriebenen Nachteile bekannter Anlagen vermeidet und es ermöglicht, methanhaltiges Naturgas, insbesondere Erd- und Biogas so aufzubereiten, dass ein besonders hoher Gehalt an Methan erzielt wird.

Die Erfindung löst diese Aufgabe durch Bereitstellen einer Anlage gemäß Anspruch 1 und eines Verfahrens gemäß Anspruch▪11. In einem ersten Schritt wird Wasser 11 mit Hilfe einer ersten Membran in einem Entgasungsmodul 1 und/oder Riesler entgast. Mit diesem entgasten Wasser werden in einem zweiten Schritt an einer zweiten Membran in einem Gasaustauschmodul 2 dem Naturgas unerwünschte Gase, wie beispielsweise Kohlendioxid (CO₂ und H₂S), entzogen.

Mit der erfindungsgemäßen Anlage und dem erfindungsgemäßen Verfahren zur Aufbereitung von methanhaltigen Naturgas ist es möglich, den Methangehalt des Naturgases auf Konzentrationen von größer als 98% anzureichern. Damit wird eine Einspeisung des aufbereiteten Naturgases in Erdgasnetze ermöglicht. Ein besonderer Vorteil der erfindungsgemäßen Anlage ist, dass aufbereitetes Naturgas (Methangas) mit einem hohen Reinheitsgrad zur Verfügung gestellt werden kann, wobei gleichzeitig die Nachteile der oben beschriebenen Anlagen, wie etwa die Verwendung von Kältemittel, Bakterien und hohen Drucken, wie sie eingangs für die aus dem Stand der Technik bekannten Verfahren beschrieben sind, vermieden werden.

Weitere Vorteile der erfindungsgemäßen Anlage sind, dass sie ohne den Einsatz von Chemikalien auskommt und, dass sie keinerlei Abfälle oder Abwässer produziert. Weiterhin kann die Anlage mit niedrigen Drücken arbeiten, daher ist der Energiebedarf der Anlage vergleichsweise gering. Die Anlage benötigt lediglich Wasser und elektrische Energie und ist außerdem einfach zu bedienen und wartungsarm.

### Definitionen

Zunächst seien einige im Rahmen der Erfindung verwendete Begriffe genauer definiert.

Der Begriff "methanhaltiges Naturgas" umfasst jegliches Gas aus natürlichen Quellen welches Methan enthält, insbesondere "Erdgas" und "Biogas". "Erdgas" ist ein brennbares Naturgas, das konventionell in unterirdischen Lagerstätten, insbesondere in sogenannten "Erdgasfallen" vorkommt und/oder als Nebenprodukt bei der Erdölförderung gewonnen wird. Des Weiteren kann Erdgas aus nicht-konventionellen Quellen gewonnen werden, worunter insbesondere Flözgase aus Kohleflözen, Erdgas aus Aquiferen, Gashydrat in Gesteinen und auf dem Meeresgrund, "Tight Gas" in Sandsteinschichten oder Schiefergas ("Shale Gas") fällt, die unter anderem durch Horizontalbohrungen und Fracing erschlossen werden können. "Biogas" meint im Rahmen der Erfindung ein Gas, das zu einem großen Teil aus Methan (CH₄) besteht und durch Vergärung von Biomasse jeder Art hergestellt wird. Der Methangehalt von Biogas liegt üblicher Weise bei 50 - 60%. Biogas kann zudem große störende Anteile an anderen Gasen enthalten, insbesondere Kohlendioxid (CO₂) und Schwefelwasserstoff (H₂S). Die restlichen 40 - 50% setzen sich aus solchen unerwünschten Gasen zusammen. Im Rahmen der Erfindung können die Begriffe "Rohbiogas" und "unbehandeltes Biogas" als Synonyme zu "Biogas" verwendet werden.

Der Begriff "Methangas" meint im Rahmen der Erfindung das aufbereitete methanhaltige Naturgas, insbesondere Erd- und Biogas, welches ein Produkt des erfindungsgemäßen Verfahrens ist. "Methangas" kann im Rahmen der Erfindung einen Methangehalt (CH₄) von bevorzugt über 90% und besonders bevorzugt von über 95% aufweisen. "Methangas" kann im Rahmen der Erfindung einen Methangehalt (CH₄) von über 96% und besonders bevorzugt von größer als 98% aufweisen. Im Rahmen der Erfindung kann das Methangas in das Erdgasnetz eingespeist werden. Die Begriffe "Methangas" und "aufbereitetes Naturgas", "aufbereitetes Biogas" und "aufbereitetes Erdgas" können im Rahmen der Erfindung synonym verwendet werden. Im Rahmen der Erfindung kann das "Methangas" in einem letzten Schritt zusätzlich getrocknet werden.

Der Begriff "Strippgas" (Englisch "strip gas") wird im Rahmen der Erfindung im Zusammenhang mit der Entgasung von Wasser mit Hilfe eines Entgasungsmoduls 1 verwendet. Während der Entgasung werden Kohlendioxid (CO₂) und andere in dem zugeleiteten Wasser gelöste Gase mit dem Strippgas an die Umgebungsluft abgegeben. Dabei gehen die im Wasser gelösten Gase aus der wässrigen Phase in die Gasphase der Luft, bzw. in die Gasphase des Strippgases über, und werden zusammen mit dieser über eine Vakuumpumpe 6 an die Umgebungsluft abgegeben. Als alternativer Begriff für "strip gas" kann im Rahmen der Erfindung der Begriff "sweep gas" (Englisch, "Strippgas" Deutsch) verwendet werden. Das Bezugszeichen 12 kann Strippgas oder Vakuum meinen.

Der Begriff "Entgasungsmodul" wird im Rahmen der Erfindung für ein Modul verwendet, das eine wasserundurchlässige und gasdurchlässige Membran umfasst (semi-permeable Membran), an der der Übergang von Gasen aus der wässrigen Phase in die Gasphase stattfindet. Der Übergang von Gasen findet an Mikroporen der Membran statt (mikroporöse Membran). Allgemein wird der Gasaustausch an mikroporösen Membranen als "Membranabsorption" bezeichnet. Im Rahmen der Erfindung ist damit insbesondere der Übergang von z.B. Kohlendioxid (CO₂) aus dem entsalzten Wasser in Schritt a) des erfindungsgemäßen Verfahrens in das "Strippgas" 12 gemeint, welches angesaugte, gefilterte Umgebungsluft sein kann. Das Entgasungsmodul kann eine Hohlfasermembran umfassen. Das Entgasungsmodul kann z.B. das Gasaustauschmodul Liqui-Cel ® der Firma Membrana sein (Membrana, Charlotte, NC, USA) . Der Begriff "Entgasungsmodul" bezieht sich im Rahmen der Erfindung auf das Entgasungsmodul 1.

Der Begriff "Gasaustauschmodul" wird im Rahmen der Erfindung für ein Modul verwendet, das eine wasserundurchlässige und gasdurchlässige Membran umfasst (semi-permeable Membran), an der der Übergang von Gasen aus der Gasphase in die wässrige Phase stattfindet. Der Übergang von Gasen findet an Mikroporen der Membran statt (mikroporöse Membran). Allgemein wird der Gasaustausch an mikroporösen Membranen als "Membranabsorption" bezeichnet. Im Rahmen der Erfindung ist damit insbesondere der Übergang von z.B. Kohlendioxid (CO₂) und Schwefelwasserstoff (H₂S) aus dem zugeführten methanhaltigen Naturgas in Schritt b) des erfindungsgemäßen Verfahrens in das entsalzte und entgaste Wasser aus Schritt a) gemeint. Das Gasaustauschmodul kann eine Hohlfasermembran umfassen, bzw. eine Hohlfaserentgasungsmembran. Das Gasaustauschmodul kann z.B. das Gasaustauschmodul Liqui-Cer® der Firma Membrana sein (Membrana, Charlotte, NC, USA). Im Rahmen der Erfindung können die Begriffe "Gasaustauschmodul" bzw. "Hohlfaserentgasungsmodul" synonym verwendet werden. Der Begriff "Gasaustauschmodul" bezieht sich im Rahmen der Erfindung auf das Gasaustauschmodul 2. Allgemein wird der Gasaustausch an mikroporösen Membranen als Membranabsorption bezeichnet.

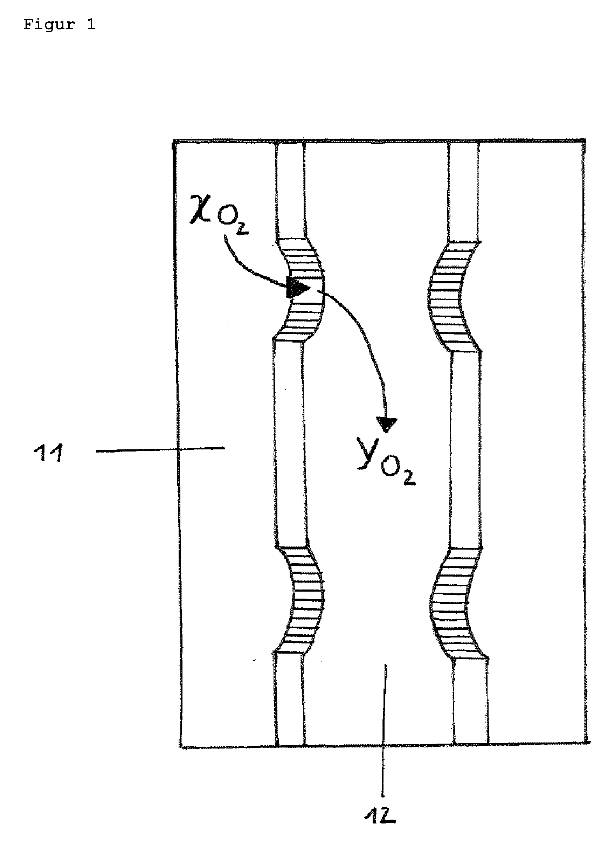

Der Begriff "semi-permeable" Membran bezieht sich im Rahmen der Erfindung auf eine wasserundurchlässige und gasdurchlässige Membran, an der der Übergang von Gasen aus der wässrigen Phase in die Gasphase stattfindet. Die semi-permeable Membran weist Mikroporen auf (mikroporöse Membran), wobei an den Mikroporen der Übertritt von im Wasser gelösten Gasen in die Gasphase auf der anderen Seite der Membran stattfindet. Dieses Prinzip ist in **Figur 1** dargestellt. Im Rahmen der Erfindung kann die semi-permeable Membran in Form einer Hohlfasermembran ausgebildet sein.

Mit dem Begriff "unerwünschtes Gas" wird im Rahmen der Erfindung ein Gas gemeint, dass den Reinheitsgrad des methanhaltigen Naturgases verschlechtert, also den Methangehalt des Naturgases senkt. Beispiele für "unerwünschte Gase" sind Kohlendioxid (CO₂) und Schwefelwasserstoff (H₂S), aber die unerwünschten Gase können auch andere Gase sein, welche unterschiedlich von Methan sind. Das erfindungsgemäße Verfahren entfernt diese unerwünschten Gase aus dem methanhaltigen Naturgas, wodurch Methangas mit einem erhöhten Methangehalt erhalten wird (aufbereitetes Naturgas).

### Figuren und Tabellen

**Figur 1****:** Das Wasser 11 enthält aus der Atmosphäre gelöstes Gas (hier z.B. O₂, Sauerstoff), welches sich in einem Partialdruckgleichgewicht mit der umgebenden Atmosphäre befindet. Das bedeutet, dass das Wasser 11 mit Gas gesättigt ist. Wird ein Vakuum in der Hohlfaser angelegt, verschiebt sich das Partialdruckgefälle, und das im Wasser 11 gelöste Gas (hier X O₂) entweicht in das Vakuum in Gasform (hier gasförmiges y O₂). Dabei tritt das Gas von der im Wasser 11 gelösten Phase von der einen Seite der Membran (X O₂, links gezeigt) durch die Mikropore (schraffiert gezeigt) der semipermeablen Membran in die Gasphase über (y O₂) . Das Partialdruckgefälle in das Vakuum wird zusätzlich erhöht, wenn ein Strippgas 12 (Englisch "strip gas" oder "sweep gas"), z.B. Stickstoff, auf der Vakuumseite eingesetzt wird.
**Figur 2** zeigt das Grundprinzip der erfindungsgemäßen Anlage und des erfindungsgemäßen Verfahrens. Gezeigt ist eine Ausführungsform der erfindungsgemäßen Anlage zur Aufbereitung von methanhaltigen Naturgas umfassend die Komponenten Entgasungsmodul 1, Gasaustauschmodul 2, Wassertank 3, Umwälzpumpe 4, Luftfilter 5 und Vakuumpumpe 6.
**Figur 3** zeigt eine weitere Ausführungsform der erfindungsgemäßen Anlage mit den zusätzlichen Komponenten Vorrichtung zur Entschwefelung 7 (z.B. ein Aktivkohlefilter), Kondensator zur Trocknung 8 (Methangas-Trocknung) und Verdichter 9 (Naturgas-Verdichter).
**Figur 4** zeigt eine weitere Ausführungsform der erfindungsgemäßen Anlage mit der zusätzlichen Komponente Riesler 10, der dem Entgasungsmodul 1 vorgeschaltet ist.
**Figur 5** zeigt das Ergebnis eines Versuchlaufs der Anlage, bei dem der Methangehalt des Naturgases, hier Biogases, in Abhängigkeit vom Wasservolumenstrom gemessen wurde (**Beispiel 1** und **Tabelle 2**).
**Figur 6** zeigt Ergebnis eines Versuchlaufs der Anlage, bei dem der Methangehalt des Naturgases, hier Biogases, in Abhängigkeit vom Volumenstrom des Biogases gemessen wurde (**Beispiel 2** und **Tabelle 3**).
F**igur** 7 zeigt eine weitere Ausführungsform der erfindungsgemäßen Anlage analog Figur 4, jedoch ohne Entgasungsmodul.

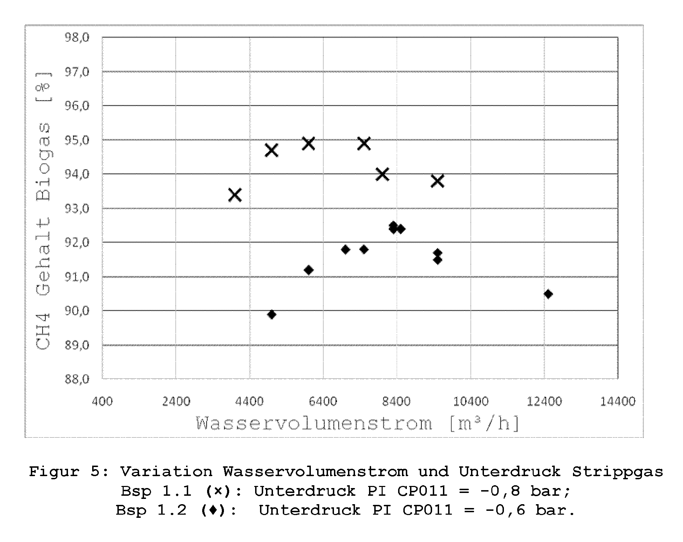

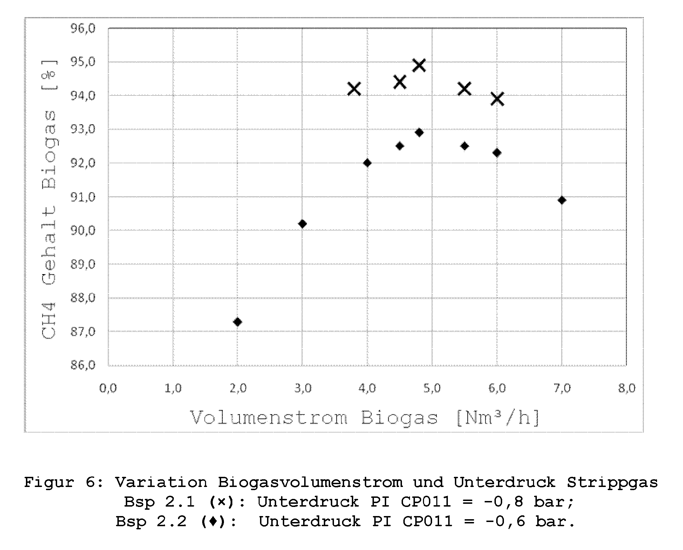

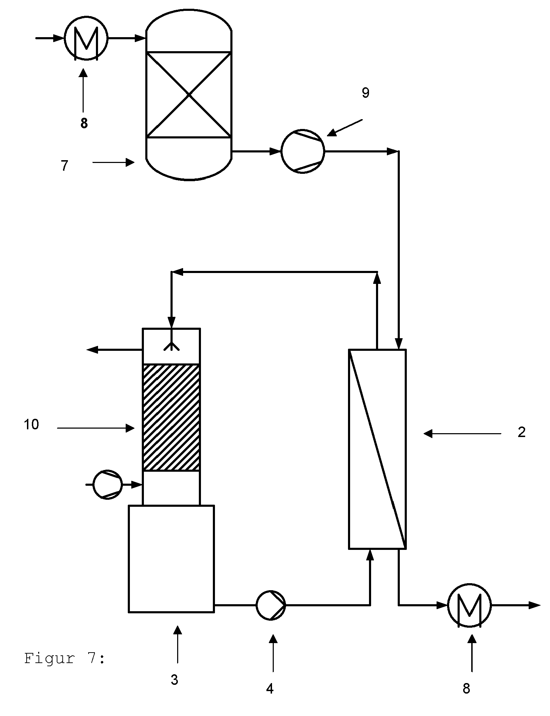

**Tabelle 1:** Die Tabelle listet Messwerte für die Parameter Druck, Durchfluss, Leitfähigkeit, pH-Wert, Methangasgehalt, Temperatur und Wasserhärte auf.
**Tabelle 2:** Messergebnisse des Versuchs des Beispiels 1, gezeigt in **Figur 5****.**
**Tabelle 3:** Messergebnisse des Versuchs des Beispiels 2, gezeigt in **Figur 6****.**
**Tabelle 4:** Gezeigt sind die Betriebsparameter der Versuche der Beispiele 1 und 2.

Im Folgenden sei die Erfindung genauer beschrieben.

Die erfindungsgemäße Anlage und das erfindungsgemäße Verfahren werden dazu verwendet, unerwünschte Gase aus methanhaltigen Naturgas zu entfernen, welche den Brennwert des Gases reduzieren. Die erfindungsgemäße Anlage und das erfindungsgemäße Verfahren können insbesondere die unerwünschten Gase Kohlenstoffdioxid (CO₂) und Schwefelwasserstoff (H₂S) aus dem methanhaltigen Naturgas entfernen. Dadurch wird der Methangasgehalt (CH₄) des Naturgases erhöht. Das Verfahren kann aber genauso auch andere von Methan unterschiedliche unerwünschte Gase aus dem Naturgas entfernen, welche den Methangehalt des Naturgases senken und so den Brennwert des Naturgases reduzieren.

In einer ersten Ausführungsform umfasst die Anlage zwei hintereinander geschaltete Membranen, wobei die erste Membran sich in einem Entgasungsmodul 1 befindet und die zweite Membran in einem Gasaustauschmodul 2. Die Schritte des Entgasens von Kreislaufwasser 11 an einer ersten Membran in dem Entgasungsmodul 1 und des Gasaustausches an einer zweiten Membran in dem Gasaustauschmodul 2 sind hintereinander geschaltet. In einem ersten Schritt wird Wasser 11 mit Hilfe der ersten Membran entgast. Mit diesem entgasten Wasser werden in einem zweiten Schritt an der zweiten Membran dem methanhaltigen Naturgas unerwünschte Gase, wie beispielsweise Kohlendioxid (CO₂) und Schwefelwasserstoff (H₂S), entzogen. In einer zweiten Ausführungsform der Erfindung wird das Entgasungsmodul 1 mit der ersten Membran durch einen Rielser 10 ersetzt.

Die Erfindung stellt eine Anlage zur Aufbereitung von methanhaltigen Naturgas zur Verfügung umfassend:
a) wenigstens ein Entgasungsmodul 1 und/oder wenigstens einen Riesler 10, und
b) wenigstens ein Gasaustauschmodul 2,
wobei das Entgasungsmodul 1 und/oder der Riesler 10 und das Gasaustauschmodul 2 in einem Wasserkreislauf verbunden sind und in Strömungsrichtung des Wassers 11 hintereinander angeordnet sind, wobei das Wasser 11 in dem Entgasungsmodul 1 und/oder dem Riesler entgast wird und das entgaste Wasser in dem Gasaustauschmodul 2 unerwünschte Gase aus dem zugeführten methanhaltigen Naturgas aufnimmt, und wobei das zugeführte Naturgas im Gegenstrom zu dem entgasten Wasser dem wenigstens einen Gasaustauschmodul 2 zugeführt wird.

Im Folgenden sei die Funktionsweise der erfindungsgemäßen Anlage genauer beschrieben. Das in der Anlage verwendete Wasser 11 enthält aus der Atmosphäre gelöste Gase, die sich einem Partialdruckgleichgewicht mit der Umgebungsluft befinden. Das bedeutet, dass das Wasser 11 mit Gas gesättigt ist.

Für einen ersten Entgasungsschritt a) wird Wasser 11 über eine Umwälzpumpe 4 zu dem Entgasungsmodul 1 und/oder den Riesler gepumpt. Das Wasser 11 wird vorher enthärtet oder entsalzt, was in einer dem Entgasungsmodul 1 vorgeschalteten Entsalzungsanlage oder in einer der erfindungsgemäßen Anlage vorgeschaltenen Enthärtungs- oder Entsalzungsstufe geschehen kann.

Das Wasser 11 tritt über einen Anschluss in das Entgasungsmodul 1 ein und durchströmt das Modul, wobei es auf einer Seite einer wasserundurchlässigen Membran bleibt. Parallel dazu wird Luft oder ein Strippgas, beispielsweise Stickstoff, über eine Vakuumpumpe 6 über einen zweiten Anschluss des Entgasungsmoduls 1 im Gegenstrom zu dem Wasser durch das Entgasungsmodul 1 geführt, wobei die Luft bzw. das Strippgas auf der anderen Seite der wasserundurchlässigen Membran geführt werden. Die Membran im Entgasungsmodul 1 ist wasserundurchlässig und gasdurchlässig, wobei die Gasdurchlässigkeit der Membran durch Mikroporen gewährleistet wird. Die Membran ist bevorzugt eine Hohlfasermembran. An der durch die von der Membran gebildeten Abgrenzung zwischen Wasser auf der einen Membranseite und Luft bzw. Strippgas 12 auf der anderen Membranseite findet der Übergang von im Wasser gelösten Gasen durch die Membran in das erzeugte Vakuum bzw. das Strippgas 12 statt. Dabei folgen die im Wasser 11 gelösten Gase dem Partialdruckgefälle und entweichen in das Vakuum bzw. in das Strippgas 12. Dabei treten die im Wasser 11 gelösten Gase, beispielsweise Kohlendioxid (CO₂) und Sauerstoff (O₂), an der Membran in die Gasphase über und gehen in Gasform in das erzeugte Vakuum bzw. in das Strippgas über.

Das Partialdruckgefälle in das Vakuum kann zusätzlich erhöht werden, wenn ein Strippgas 12, z.B. Stickstoff, auf der Vakuumseite eingesetzt wird. Dieses Prinzip ist in **Figur 1** dargestellt.

Alternativ oder in Ergänzung zu dem Entgasumgsmodul 1 kann das Wasser mittels eines Rieslers 10 entgast werden.

Das entgaste Wasser, welches enthärtet oder entsalzt ist, verlässt das Entgasungsmodul 1 oder den Riesler 10 über einen Ausgang des Entgasungsmoduls 1 oder einen entsprechenden Ausgang des Rieslers 10 und wird durch die Umwälzpumpe 4 zu dem Gasaustauschmodul 2 gepumpt. Die dabei zu überbrückende Strecke muss nicht lang sein, denn das Gasaustauschmodul 2 kann sich direkt an das Entgasungsmodul 1 oder den Riesler 10 anschließen. Das Gasaustauschmodul 2 kann sich aber auch weiter entfernt von dem Entgasungsmodul 1 befinden, z.B. in einem getrennten Raum, wodurch ein besserer Explosionsschutz erzielt werden kann.

Das im Entgasungsmodul 1 oder Riesler 10 entgaste Wasser, welches enthärtet oder entsalzt ist, tritt über einen Anschluss in das Gasaustauschmodul 2 ein und durchströmt das Modul, wobei es auf einer Seite einer wasserundurchlässigen Membran bleibt. Parallel dazu wird aufzubereitendes methanhaltiges Naturgas über einen zweiten Anschluss des Gasaustauschmoduls 2 im Gegenstrom zu dem entgasten Wasser durch das Gasaustauschmodul 2 geführt, wobei das Naturgas auf der anderen Seite der wasserundurchlässigen Membran geführt wird. Die Membran im Gasaustauschmodul 2 ist wasserundurchlässig und gasdurchlässig. Die Membran im Gasaustauschmodul 2 ist bevorzugt eine Hohlfasermembran.

An der durch die von der Membran im Gasaustauschmodul 2 gebildeten Abgrenzung zwischen entgastem Wasser auf der einen Membranseite und aufzubereitendem methanhaltigen Naturgas auf der anderen Membranseite findet der Übergang von im Naturgas enthaltenen unerwünschten Gasen durch die Membran in das entgaste Wasser statt. Dabei treten die im aufzubereitenden methanhaltigen Naturgas enthaltenen unerwünschten Gase, beispielweise Kohlendioxid (CO₂) oder Schwefelwasserstoff (H₂S), an der Membran zu einem großen Teil in das entgaste und entsalzte Wasser über. Dadurch entsteht aufbereitetes bzw. angereichertes Naturgas mit einem erhöhten Methangehalt, im Rahmen der Erfindung auch Methangas genannt, welches das Gasaustauschmodul 2 über einen Ausgang verlässt. Das so erhaltene Methangas kann einen Methangehalt von größer als 98% aufweisen und damit für eine Einspeisung in das Erdgasnetz bestens geeignet sein.

Bei dem Gasaustausch an der Membran des Entgasungsmoduls 1 und an der Membran des Gasaustauschmoduls 2 wird die natürliche Kapazität des Wassers ausgenutzt, Gase selektiv aus der Umgebung aufzunehmen und in die Umgebung wieder abzugeben. Die Aufnahmekapazität des Wassers für verschiedene Gase ist dabei von dem Salzgehalt des Kreislaufwassers, dem Partialdruck des jeweiligen Gases auf beiden Seiten der Phasengrenze und der Temperatur des Kreislaufwassers abhängig. Der Stoffübergang kann durch die verfahrenstechnischen Parameter Strömungsverhältnisse an der Phasengrenze, Größe der Austauschfläche und das Konzentrationsgefälle (Gradient) des Gases an der Phasengrenze beeinflusst werden. Im Falle von Kohlendioxid (CO₂) ist zusätzlich die Chemie der anorganischen Kohlenstoffverbindungen im Wasser (Kalk-Kohlensäure-Gleichgewicht) zu beachten. Deshalb können auch die Parameter pH-Wert und die Konzentration von Erdalkalimetallen im Kreislaufwasser (Wasserhärte) einen Einfluss auf den Gasaustausch an der Membran des Entgasungsmoduls 1 und an der Membran des Gasaustauschmoduls 2 haben.

Das Wasser mit den aus dem methanhaltigen Naturgas aufgenommenen und gelösten unerwünschten Gasen verlässt das Gasaustauschmodul 2 über einen Ausgang und kann über eine Umwälzpumpe 4 in Form eines Kreislaufs wieder dem Entgasungsmodul 1 und oder den Riesler 10 für einen weiteren Entgasungsschritt zugeführt werden, womit ein neuer Zyklus von Entgasung des Wassers und anschließender Methan-Anreicherung des Naturgases an dem Gasaustauschmodul 2 beginnen kann.

In bevorzugten Ausführungsformen der Erfindung kann die Anlage genau ein Entgasungsmodul 1 oder einen Riesler 10 und genau ein Gasaustauschmodul 2 aufweisen. Die Anlage kann aber auch mehr als ein Entgasungsmodul 1 oder einen Riesler 10 und ein Gasaustauschmodul 2 aufweisen.

Das wenigstens eine Entgasungsmodul 1 und das wenigstens eine Gasaustauschmodul 2 können jeweils eine wasserundurchlässige und gasdurchlässige Membran umfassen, die bevorzugt eine Hohlfaserentgasungsmembran ist. Das Entgasungsmodul 1 kann Anschlüsse für Luft oder Strippgas bzw. das Vakuum aufweisen, wobei Luft oder Strippgas über einen Anschluss in das Entgasungsmodul 1 eintreten und das Entgasungsmodul 1 über einen weiteren Anschluss in Richtung Vakuum wieder verlassen. Das Entgasungsmodul 1 kann zwei weitere Anschlüsse aufweisen, nämlich einen Eingang für das Wasser und einen Ausgang für das entgaste Wasser. An diesen Ausgang kann sich der Eingang des Gasaustauschmoduls 2 direkt anschließen. In anderen Ausführungsformen der erfindungsgemäßen Anlage kann das entgaste Wasser das Entgasungsmodul 1 über den Ausgang verlassen und über eine längere Strecke durch eine Umwälzpumpe 4 zu dem Gasaustauschmodul 2 befördert werden, welches sich beispielsweise in einem anderen, abgetrennten Raum befinden kann, wodurch ein besserer Explosionsschutz erzielt werden kann. Das Gasaustauschmodul 2 kann einen Anschluss (Eingang) für das eintretende, entgaste Kreislaufwasser und einen Ausgang für das austretende Kreislaufwasser aufweisen, welches die unerwünschten Gase aus dem aufzubereitenden methanhaltigen Naturgas aufgenommen hat. Das Gasaustauschmodul 2 kann weiterhin einen Eingang für das aufzubereitende methanhaltige Naturgas und einen Ausgang für das austretende Methangas aufweisen, welches einen höheren Methangehalt als das Naturgas aufweist.

In einer Ausführungsform der Erfindung kann das Entgasungsmodul 1 bzw. das Gasaustauschmodul 2 das Gasaustauschmodul Liqui-Cer® der Firma Membrana sein (Membrana, Charlotte, NC, USA).

Die erfindungsgemäße Anlage kann weiterhin wenigstens einen Wassertank 3 umfassen, der vor dem Entgasungsmodul 1 angeordnet ist und Wasser für den Wasserkreislauf bereitstellt.

Das Wasser 11 wird vor dem Eintritt in das Entgasungsmodul 1 oder den Riesler 10, bzw. vor dem Speichern in dem Wassertank 3, entsalzt. Das Entsalzen des Wassers 11 kann bevorzugt in einer mobilen Entsalzungsanlage durchgeführt werden. Die Entsalzungsanlage kann dem Entgasungsmodul 1 oder dem Riesler 10 bzw. dem Wassertank 3 vorgeschaltet sein. Das Entsalzen oder Enthärten des Wassers kann auch in einer stationären Enthärtungs- oder Entsalzungsanlage durchgeführt werden, die in der Anlage fest integriert ist. Das Wasser muss nach Enthärtung oder Entsalzung in der Entsalzungsanlage nicht notwendigerweise in dem Wassertank 3 gesammelt werden. Das entsalzte oder enthärtete Wasser kann nach der Enthärtungs- oder Entsalzungsanlage auch direkt dem Entgasungsmodul 1 oder dem Riesler 10 zugeführt werden und so dem Kreislauf direkt ohne Speicherung in dem Wassertank 3 zur Verfügung gestellt werden.

Die Anlage kann weiterhin wenigstens eine Vakuumpumpe 6 umfassen, die an dem Entgasungsmodul 1 ein Vakuum anlegt. Die Anlage kann auch zwei oder mehr der Vakuumpumpen 6 aufweisen.

Die Anlage kann weiterhin wenigstens eine Vorrichtung zur Entschwefelung 7 aufweisen, die vor dem Gasaustauschmodul 2 angeordnet sein kann. Mit dieser Vorrichtung kann das aufzubereitende methanhaltige Naturgas vor dem Eintritt in das Gasaustauschmodul 2 entschwefelt werden. Bevorzugt ist die Vorrichtung zur Entschwefelung 7 ein Aktivkohlefilter der beispielsweise Schwefelwasserstoff (H₂S) aus dem aufzubereitenden Naturgas herausfiltern kann.

Die Anlage kann weiterhin vor dem Eintritt des methanhaltigen Naturgases in das Gasaustauschmodul 2 wenigstens einen Kondensator zur Trocknung 8 das aufzubereitenden Naturgases aufweisen. Dadurch kann dem Gasaustauschmodul 2 getrocknetes Naturgas zugeführt werden. Der Kondensator zur Trocknung 8 ist bevorzugt vor der Vorrichtung zur Entschwefelung 7 angeordnet.

Die Anlage kann weiterhin wenigstens einen Verdichter 9 aufweisen, der das aufzubereitende methanhaltige Naturgas verdichtet und der bevorzugt vor dem Gasaustauschmodul 2 angeordnet ist, und der bevorzugt mit einem Gerät zur Messung des Drucks oder des Durchflusses des Naturgases in operativer Verbindung steht. Der Verdichter 9 kann sich zwischen der Vorrichtung zur Entschwefelung 7 und dem Eintritt in das Gasaustauschmodul 2 befinden. Dadurch kann dem Gasaustauschmodul 2 entschwefeltes und verdichtetes aufzubereitendes methanhaltiges Naturgas zugeführt werden. In besonderen Ausführungsformen der Erfindung kann die Anlage zwei oder mehr Verdichter 9 aufweisen, wobei wenigstens ein zusätzlicher Verdichter vor dem Gasaustauschmodul 2 angeordnet sein kann.

In einer weiteren Ausführungsform der erfindungsgemäßen Anlage kann nach dem Austritt des aufbereiteten Naturgases (Methangas) aus dem Gasaustauschmodul 2 wenigstens ein weiterer Kondensator zur Trocknung 8 nachgeschaltet sein, wodurch das Methangas, das das Gasaustauschmodul 2 verlässt, getrocknet wird und als getrocknetes Methangas die Anlage verlassen kann.

Die Anlage kann zusätzlich ein oder mehrere Messgeräte umfassen, wie z.B. ein Gerät zur Messung des Wasserdrucks, ein Gerät zur Messung des Drucks von Strippgas oder Biogas, ein pH-Messgerät, Temperatur-Messgerät, Messgerät zur Leitfähigkeit des Wassers und Messgerät zur Bestimmung des Härtegrades des Wassers. Die Anlage kann jeweils eines oder mehrer dieser Arten von Messgeräten umfassen. Beispielsweise kann der Verdichter 9 mit einem Gerät zur Messung des Drucks des methanhaltigen Naturgases in operativer Verbindung stehen, bevorzugt vor dem Eingang des aufzubereitenden Naturgases in das Gasaustauschmodul 2.

Das wenigstens eine Entgasungsmodul 1 und oder der Riesler 10 und das wenigstens eine Gasaustauschmodul 2 der erfindungsgemäßen Anlage können räumlich getrennt sein. Das bedeutet, dass das Entgasungsmodul 1 und oder der Riesler 10 und das Gasaustauschmodul 2 sich in verschiedenen Räumen befinden können. Dieses Konzept wird als "EX-Schutz" bezeichnet und dient dem Explosionsschutz in explosionsgefährdeten Bereichen (Explosionsschutz nach ATEX-Produktrichtlinie 94/9/EG). Dabei kann sich das Gasaustauschmodul 2, das mit dem methanhaltigen Naturgas in Kontakt kommt, in einem separaten Raum befinden, um einen Schutz vor Explosionen zu bieten. Die Umwälzpumpe 4, der Verdichter 9 und die Messgeräte können sich in einem anderen Raum befinden, in dem es keine EX-Zone gibt, und müssen nicht als ATEX-Geräte ausgeführt werden, so dass für Wartungsarbeiten keine besonderen Vorkehrungen getroffen werden müssen.

In einer weiteren Ausführungsform der erfindungsgemäßen Anlage kann dem wenigstens einen Entgasungsmodul 1 wenigstens ein Riesler 10 vorgeschaltet sein, der vor der Entgasung des Wassers 11 in dem Entgasungsmodul 1 im Wasser gelöste Gase zusätzlich entzieht.

Die Erfindung stellt weiterhin die Verwendung der oben beschriebenen Anlage zur Aufbereitung von methanhaltigen Naturgas zur Verfügung.

Die Erfindung stellt weiterhin ein Verfahren zur Aufbereitung von methanhaltigen Naturgas zur Verfügung, umfassend die Schritte:
a) Entgasung von Wasser 11 an wenigstens einem Entgasungsmodul 1 und/oder einem Riesler 10, und
b) Gasaustausch des entgasten Wassers 11 aus Schritt a) an wenigstens einem Gasaustauschmodul 2, wobei im zugeführten methanhaltigen Naturgas enthaltene unerwünschte Gase aus der Gasphase des Naturgases in die wässrige Phase des entgasten Wassers übergehen,
dadurch gekennzeichnet, dass die Schritte a) und b) hintereinander durchgeführt werden, wobei das Entgasungsmodul 1 und/oder der Riesler 10 des Schrittes a) und das Gasaustauschmodul 2 des Schrittes b) in einem Wasserkreislauf verbunden sind und in Strömungsrichtung des Wassers 11 hintereinander angeordnet sind, und wobei das methanhaltige Naturgas im Gegenstrom zu dem entgasten Wasser dem wenigstens einen Gasaustauschmodul (2) zugeführt wird.

Das erfindungsgemäße Verfahren zur Aufbereitung von methanhaltigen Naturgas umfasst zwei Verfahrensschritte, wobei in einem ersten Schritt a) Wasser 11 mit Hilfe wenigstens eines Entgasungsmoduls 1 und/oder einem Rielser 10 entgast wird. Das in der Anlage verwendete Wasser enthält aus der Atmosphäre gelöste Gase, die sich einem Partialdruckgleichgewicht mit der Umgebungsluft befinden. Das bedeutet, dass das Wasser mit Gas gesättigt ist. Für den ersten Entgasungsschritt a) wird Wasser über eine Umwälzpumpe 4 zu dem Entgasungsmodul 1 gepumpt. Alternativ kann das über einen Riesler entgaste Wasser verwendet werden. Das Wasser wird vorher enthärtet oder entsalzt, was in einer vorgeschalteten Enthärtungs- oder Entsalzungsanlage geschehen kann.

Mit diesem entgasten Wasser werden in einem zweiten Schritt b) über das Gasaustauschmodul 2 dem methanhaltigen Naturgas unerwünschte Gase, wie beispielsweise Kohlendioxid (CO₂) und Schwefelwasserstoff (H₂S), entzogen. Dadurch entsteht aufbereitetes Naturgas mit einem erhöhten Methangehalt (CH₄).

Im Rahmen des erfindungsgemäßen Verfahrens wird das Wasser 11 vor Schritt a) entsalzt, wobei die Leitfähigkeit des entsalzten Wassers kleiner als 500 µS/cm ist, bevorzugt kleiner als 400 µS/cm sein kann, weiterhin bevorzugt kleiner als 300 µS/cm sein kann, weiterhin bevorzugt kleiner als 200 µS/cm sein kann, weiterhin bevorzugt kleiner als 100 µS/cm sein kann, weiterhin bevorzugt kleiner als 50 µS/cm sein kann und weiterhin bevorzugt kleiner als 10 µS/cm sein kann.

Im Rahmen des erfindungsgemäßen Verfahrens kann die Härte des entsalzten Wassers kleiner als 0,2 °dH sein, bevorzugt kleiner als 0,1 °dH sein und besonders bevorzugt kleiner als 0,05 °dH sein.

Die in Schritt b) des erfindungsgemäßen Verfahrens aus dem methanhaltigen Naturgas entfernten unerwünschten Gase können Schwefelwasserstoff (H₂S) und Kohlendioxid (CO₂) sein. Es können aber auch jegliche andere Arten von unerwünschten Gasen entfernt werden, die unterschiedlich von Methan sind und den Methangehalt des Naturgases senken und so seinen Reinheitsgrad verschlechtern können.

Der Methangehalt des aufbereiteten Naturgases nach Schritt b) des erfindungsgemäßen Verfahrens kann größer als 80% sein, bevorzugt größer als 85% sein, weiterhin bevorzugt größer als 90% sein, besonders bevorzugt größer als 95% sein. In einer besonders bevorzugten Ausführungsform kann der Methangehalt des aufbereiteten Naturgases nach Schritt b) größer als 98% sein.

Im Rahmen des erfindungsgemäßen Verfahrens kann das aufzubereitende methanhaltige Naturgas vor dem Eintritt in das Gasaustauschmodul 2 in Schritt b) entschwefelt werden. Der zusätzliche Verfahrensschritt der Entschwefelung des Naturgases kann bevorzugt mit wenigstens einer Vorrichtung zur Entschwefelung 7 durchgeführt werden, die dem Gasaustauschmodul 2 vorgeschaltet ist. Die wenigstens eine Vorrichtung zur Entschwefelung 7 kann ein Aktivkohlefilter sein, der beispielsweise Schwefelwasserstoff (H₂S) aus dem methanhaltigen Naturgas herausfiltern kann.

Zusätzlich kann das aufzubereitende methanhaltige Naturgas vor dem Eintritt in das Gasaustauschmodul 2 getrocknet werden. Der zusätzliche Verfahrensschritt der Trocknung des Naturgases kann bevorzugt mit wenigstens einem Kondensator zur Trocknung 8 durchgeführt werden. Dadurch kann dem Gasaustauschmodul 2 entschwefeltes und getrocknetes Naturgas zugeleitet werden.

In einer weiteren Ausführungsform des erfindungsgemäßen Verfahrens kann das methanhaltige Naturgas vor dem Eintritt in das Gasaustauschmodul 2 in Schritt b) durch wenigstens einen Verdichter 9 verdichtet werden. Der Verdichter 9 kann sich vor dem Gasaustauschmodul 2 befinden. Das Zusammenwirken der Komponenten Vorrichtung zur Entschwefelung 7, Kondensator zur Trocknung 8 and Verdichter 9 ermöglicht eine Zuführung von getrocknetem, entschwefelten und verdichtetem aufzubereitendem Naturgas zu dem Gasaustauschmodul 2 für die Durchführung von Schritt b) des Verfahrens.

Im Rahmen des erfindungsgemäßen Verfahrens können die Schritte a) Entgasung des Wassers 11 und b) Gasaustausch des entgasten Wassers räumlich getrennt durchgeführt werden. Das bedeutet, dass das wenigstens eine Entgasungsmodul 1 und/oder der wenigstens eine Riesler 10 und das wenigstens eine Gasaustauschmodul 2 der erfindungsgemäßen Anlage sich in verschiedenen Räumen befinden können. Dieses Konzept wird als "EX-Schutz" bezeichnet (Explosionsschutz nach ATEX-Produktrichtlinie 94/9/EG). Dabei kann sich das Gasaustauschmodul 2, das mit dem methanhaltigen Naturgas in Kontakt kommt, in einem separaten Raum befinden. Die Pumpen, Verdichter und Messgeräte können sich in einem anderen Raum befinden, in dem es keine EX-Zone gibt, und müssen nicht als ATEX-Geräte ausgeführt werden, so dass für Wartungsarbeiten keine besonderen Vorkehrungen getroffen werden müssen.

Das erfindungsgemäße Verfahren kann in der erfindungsgemäßen Anlage durchgeführt werden, wie sie hierin beschrieben ist.

In einer weiteren Ausführungsform des erfindungsgemäßen Verfahrens kann der Entgasung des Wassers 11 an wenigstens einem Entgasungsmodul 1 in Schritt a) ein zusätzlicher Entgasungsschritt an wenigstens einem Riesler 10 vorgeschaltet sein, der vor der Entgasung des Wassers 11 in dem Entgasungsmodul 1 im Wasser gelöste Gase zusätzlich entzieht.

Alternativ kann die Entgasung an einem Riesler 10 durchgeführt werden welcher der Umwälzpumpe 4 vorgeschaltet ist.

Im Folgenden seien die erfindungsgemäße Anlage und das erfindungsgemäße Verfahren zur Aufbereitung von methanhaltigen Naturgas genauer beschrieben.

### Entgasungsmodul 1 und Schritt a): Entgasung von Wasser an wenigstens einer Entgasungsmodul 1 oder einem Riesler 10

Das verwendete salzarme bzw. entsalzte Wasser 11 kann zur Entgasung in Schritt a) aus dem Wassertank 3 entnommen werden und durch eine Umwälzpumpe 4 dem Entgasungsmodul 1 zugeführt werden. Die erfindungsgemäße Anlage kann daher wenigstens eine Umwälzpumpe 4 aufweisen.

Das verwendete salzarme bzw. entsalzte Wasser 11 kann zur Entgasung in Schritt a) aus dem Wassertank 3 entnommen werden dem ein Riesler 1 vorgeschaltet wurde und durch eine Umwälzpumpe 4 gefördert werden. Die erfindungsgemäße Anlage kann daher wenigstens eine Umwälzpumpe 4 aufweisen.

Die Härte des in Schritt a) verwendeten Wassers 11 kann im Bereich von kleiner als 0,2 °dH liegen. Bevorzugt kann die Resthärte unter 0,1 °dH betragen. Besonders bevorzugt kann die Resthärte kleiner als 0,05 °dH sein.

Die Leitfähigkeit des in Schritt a) verwendeten salzarmen Wassers 11 ist kleiner als 500 µS/cm, bevorzugt kann die Leitfähigkeit kleiner als 400 µS/cm sein, besonders bevorzugt kann die Resthärte kleiner als 300 µS/cm sein. Die Leitfähigkeit des salzarmen bzw. entsalzten Wassers 11 kann aber auch kleiner als 200 µS/cm, kleiner als 100 µS/cm oder kleiner als 10 µS/cm sein.

In einer bevorzugten Ausführungsform der erfindungsgemäßen Vorrichtung und des erfindungsgemäßen Verfahrens wird in Schritt a) salzarmes Wasser mit einer Resthärte von kleiner als 0,05 °dH und einer Leitfähigkeit von kleiner als 300 µS/cm verwendet.

An dem Entgasungsmodul 1 werden dem zugeleiteten, salzarmen Wasser gelöste, unerwünschte Gase wie Kohlendioxid (CO₂) und Schwefelwasserstoff (H₂S) im Vakuum über ein Strippgas weitestgehend entfernt. Das Strippgas kann beispielsweise gefilterte Umgebungsluft sein. Das Strippgas kann aber auch Stickstoff sein. Dazu kann die erfindungsgemäße Anlage an der Entgasungsmodul 1 wenigstens einen Luftfilter 5 und wenigstens eine Vakuumpumpe 6 aufweisen. Dabei kann die Vakuumpumpe 6 an dem Entgasungsmodul 1 ein Vakuum erzeugen und so über den Luftfilter 5 Umgebungsluft ansaugen, die durch das Entgasungsmodul 1 geleitet wird. Bevorzugt kann dabei die gefilterte Umgebungsluft im Gegenstrom durch das Entgasungsmodul 1 geleitet werden.

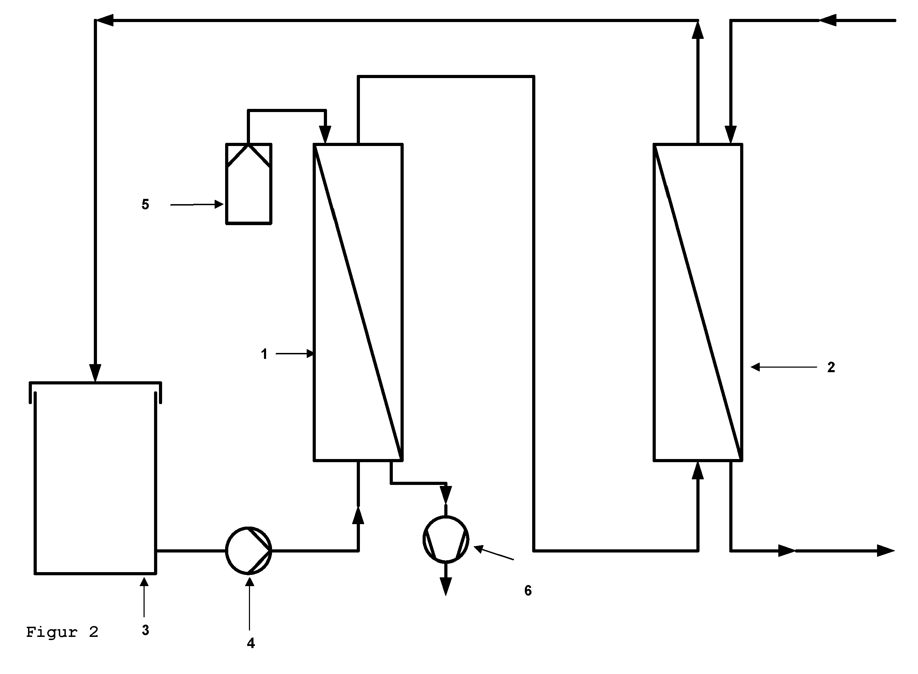

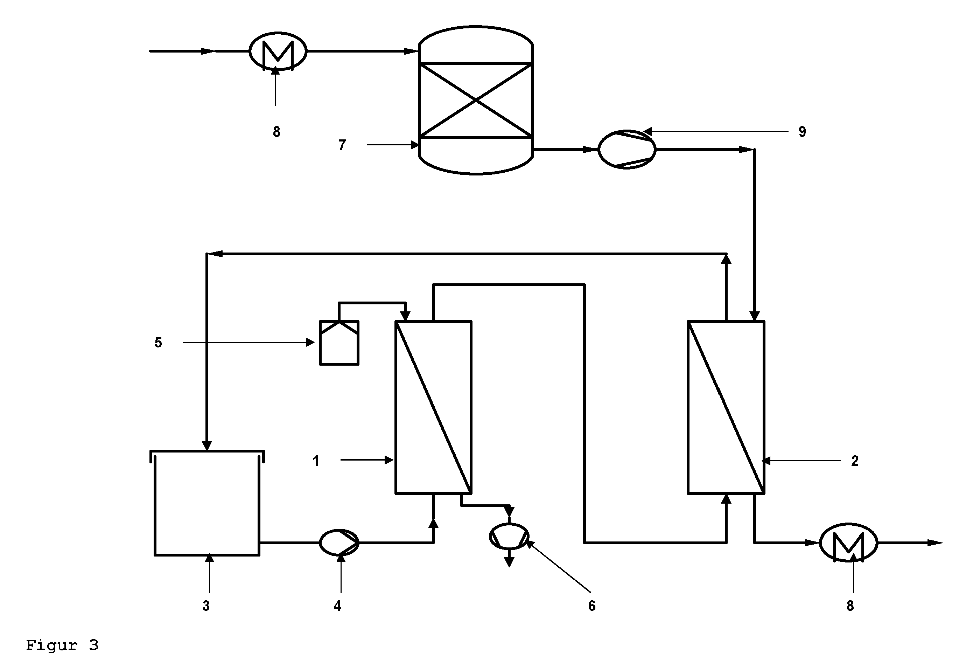

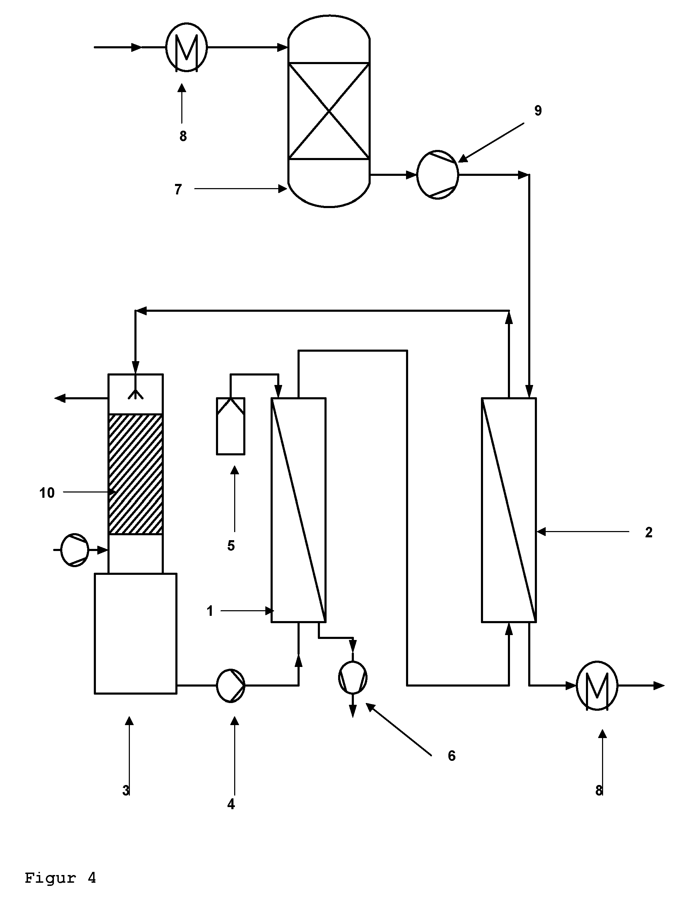

Ein Beispiel eines Entgasungsmoduls 1, das in Schritt a) verwendet werden kann, ist in den **Figuren 2-4** gezeigt.

Im Rahmen des erfindungsgemäßen Verfahrens kann in Schritt a) Entgasung des salzarmen bzw. entsalzten Wassers 11 an dem Entgasungsmodul 1 ein Vakuum angelegt werden, welches vorzugsweise mit einer Vakuumpumpe 6 erzeugt werden kann, wie oben schon für die Anlage ausgeführt. Durch das Entgasungsmodul 1 kann dabei ein sogenanntes "Strippgas" 12 (Englisch "strip gas") in Gegenstromrichtung zu dem zugeführten, salzarmen bzw. entsalzten Wasser geleitet werden. In bevorzugten Ausführungsformen wird das "Strippgas" 12 aus der Umgebungsluft bezogen, welches vorher über wenigstens einen Luftfilter 5 gereinigt werden kann. Während der Entgasung werden Kohlendioxid (CO₂ und andere in dem zugeleiteten Wasser 11 gelöste Gase mit dem Strippgas 12 an die Umgebungsluft abgegeben. Dabei gehen die im Wasser 11 gelösten Gase aus der wässrigen Phase in der Gasphase der Luft über ("strip gas" 12) und werden zusammen mit dieser über eine Vakuumpumpe 6 an die Umgebungsluft abgegeben.

Das Strippgas 12 kann während der Entgasung in Schritt a) durch die Hohlfasermembran des Entgasungsmodul 1 geleitet werden, welche von dem zugeleiteten Wasser 11 in Gegenstromrichtung umströmt wird. Dabei kann der Gasaustausch über gaspermeable Mikroporen der Hohlfasermembran stattfinden.

Das entgaste Wasser aus dem Entgasungsmodul 1 der Anlage und Schritt a) des Verfahrens wird dann zu dem wenigstens einen Gasaustauschmodul 2 der Anlage bzw. zu Schritt b) des erfindungsgemäßen Verfahrens weitergeleitet, wobei die Qualität der Reinigung (Entgasung) und die Funktion des Entgasungsmoduls 1 über eine Leitfähigkeitsmessung und eine Messung des pH-Wertes kontrolliert werden können. Die Anlage kann die dazu notwendigen Messgeräte aufweisen.

### Gasaustauschmodul 2 und Schritt b): Gasaustausch an wenigstens einem Gasaustauschmodul 2

Das in Schritt a) entgaste Wasser 11, das das Entgasungsmodul 1 über einen Ausgang verlässt wird anschließend für Schritt b) dem Gasaustauschmodul 2 zugeleitet. In einer bevorzugten Ausführungsform umfasst das Gasaustauschmodul 2 eine Hohlfasermembran. Das in Schritt b) verwendete Gasaustauschmodul kann das Gasaustauschmodul Liqui-Cel® der Firma Membrana sein (Membrana, Charlotte, NC, USA).

Das in Schritt a) entgaste Wasser 11 tritt über einen Anschluss in das Gasaustauschmodul 2 ein und verbleibt auf einer Seite einer wasserundurchlässigen, gasdurchlässigen Membran, wie oben für die Anlage bereits beschrieben. Im Gegenstrom zu dem entgasten Wasser 11 wird das aufzubereitende methanhaltige Naturgas über einen weiteren Anschluss durch das Entgasungsmodul 2 geleitet, wobei das Naturgas auf der anderen Seite der Membran verbleibt. Dabei gehen im Naturgas enthaltene unerwünschte Gase an den Mikroporen der Membran in das entgaste Wasser über. Das gereinigte Naturgas (Methangas) verlässt dann das Gasaustauschmodul 2 über einen Ausgang. Nach Verlassen des Gasaustauschmoduls 2 kann das gereinigte Naturgas (Methangas) in einem weiteren Verfahrensschritt getrocknet werden, beispielsweise durch einen weiteren Kondensator zur Trocknung 8, der sich hinter dem Gasaustauschmodul 2 befinden kann.

In einer bevorzugten Ausführungsform kann das aufzubereitende methanhaltige Naturgas in einer gefilterten und getrockneten Form dem Gasaustauschmodul 2 zugeleitet werden. In einer besonders bevorzugten Ausführungsform kann das zugeleitete Naturgas in einer gefilterten, getrockneten und verdichteten Form dem Gasaustauschmodul 2 zugeleitet werden. Dazu kann sich vor dem Gasaustauschmodul 2 wenigstens ein Kondensator zur Trocknung 8 und wenigstens eine Vorrichtung zur Entschwefelung 7 und/oder wenigstens ein Verdichter 9 befinden. Die Vorrichtung zur Entschwefelung 7 kann ein Aktivkohlefilter sein. Das aufzubereitende methanhaltige Naturgas kann durch die Vorrichtung zur Entschwefelung 7 weitestgehend von Schwefelwasserstoff (H₂S), beispielsweise durch einen Aktivkohlefilter, befreit werden und dann über einen Kondensator zur Trocknung 8 getrocknet werden. Dazu können wenigstens ein Aktivkohlefilter zur Entschwefelung und wenigstens ein Kondensator zur Trocknung dem Gasaustauschmodul b) vorgeschaltet sein. Zusätzlich kann ein Verdichter 9 vorgeschaltet sein.

Das aufzubereitende methanhaltige Naturgas kann mit einem Überdruck von 50 mbar bis 1000 mbar im Gegenstrom zum Wasser durch das Gasaustauschmodul 2 geleitet werden. In einer bevorzugten Ausführungsform kann der Überdruck des Naturgases dabei im Bereich von 50 mbar bis 500 mbar liegen. In bevorzugten Ausführungsformen der Erfindung kann der Überdruck des Naturgases dabei im Bereich von 50 mbar bis 400 mbar liegen. In besonders bevorzugten Ausführungsformen der Erfindung kann der Überdruck des Naturgases dabei im Bereich von 100 mbar bis 400 mbar liegen. In besonders bevorzugten Ausführungsformen der Erfindung kann der Überdruck des Naturgases dabei im Bereich von 100 mbar bis 200 mbar liegen.

Ein Beispiel eines Entgasungsmoduls 1 bzw. eines Gasaustauschmoduls 2 ist in den **Figuren 2-4** gezeigt. In einer

Ausführungsform der Erfindung können das Entgasungsmodul 1 und das Gasaustauschmodul 2 beide eine Hohlfasermembran umfassen. Sowohl das Entgasungsmodul 1 als auch das Gasaustauschmodul 2 können das Gasaustauschmodul Liqui-Cel® der Firma Membrana sein (Membrana, Charlotte, NC, USA). In anderen Ausführungsformen der Erfindung können aber das Entgasungsmodul 1 und das Gasaustauschmodul 2 von anderen Typen sein.

Der Wasserkreislauf in der erfindungsgemäßen Anlage kann bei einem Druck von 1 bar betrieben werden. Im Rahmen der Erfindung kann der Wasserkreislauf aber auch mit Drücken von oberhalb oder unterhalb von 1 bar betrieben werden.

In Schritt b) des erfindungsgemäßen Verfahrens können über 80% des leicht wasserlöslichen Kohlendioxids (CO₂) und Schwefelwasserstoffs (H₂S) an dem Gasaustauschmodul 2 aus dem aufzubereitendem methanhaltigen Naturgas von dem in Schritt a) entgasten Kreislaufwasser aufgenommen werden und somit der Gasphase entzogen werden. Bevorzugt können dem Naturgas über 85%, weiterhin bevorzugt über 90%, besonders bevorzugt über 95% des leicht wasserlöslichen Kohlendioxids (CO₂) und Schwefelwasserstoffs (H₂S) entzogen werden. Dadurch entsteht das Produkt des erfindungsgemäßen Verfahrens, aufbereitetes Naturgas bzw. Methangas. In einer besonders bevorzugten Ausführungsform der Erfindung kann das aufbereitete Naturgas (Methangas) einen Methangehalt von mehr als 98% aufweisen.

In Schritt b) des erfindungsgemäßen Verfahrens gehen die im aufzubereitendem methanhaltigen Naturgas gelösten unerwünschten Gase, beispielweise Kohlendioxid (CO₂) und Schwefelwasserstoff (H₂S), aus der Gasphase des Biogases über in die wässrige Phase des in Schritt a) entgasten Wassers.

Der Partialdruck des Methananteils im Naturgas (CH₄) (oder im "Rohbiogas", "unbehandeltem Biogas", bzw. "unbehandelten Erdgas" oder "Roherdgas") ist größer als der Wasserdruck im Kreislaufsystem der erfindungsgemäßen Anlage. Daher geht der Methananteil (CH₄) des Naturgases nicht, oder nur in sehr geringen Mengen in Lösung und bleibt in der Gasphase als "Methangas".

Der Methangehalt (CH₄) des Naturgases kann im Rahmen des erfindungsgemäßen Verfahrens kontinuierlich mit einer Onlinemessung überwacht werden. Die erfindungsgemäße Anlage kann die dazu notwendigen Messgeräte aufweisen.

Im Rahmen des erfindungsgemäßen Verfahrens kann nach dem Gasaustausch in Schritt b) aufbereitetes methanhaltiges Naturgas mit einer Methankonzentration (CH₄) von größer als 80%, bevorzugt von größer als 85%, weiterhin bevorzugt von größer als 90%, besonders bevorzugt von größer als 95% erhalten werden. In einer besonders bevorzugten Ausführungsform des erfindungsgemäßen Verfahrens wird nach Schritt b) Naturgas mit einer Methankonzentration (CH₄) von größer als 98% erhalten. In einer ganz besonders bevorzugten Ausführungsform des erfindungsgemäßen Verfahrens wird nach Schritt b) Naturgas mit einer Methankonzentration (CH₄) von mehr als 98% erhalten. Das erhaltene, aufbereitete Naturgas (Methangas) ist von seiner Gaszusammensetzung zur Einspeisung in das Erdgasnetz geeignet, wobei die gegebenenfalls noch erforderlichen Schritte der Odorierung, d. h. der Zusatz von Geruchsstoffen zum Gas, und die Druckerhöhung noch vorgenommen werden können, was üblicherweise in den Aufgabenbereich des Gasnetzbetreibers oder seiner Partner fällt.

Nach Durchführung des Schrittes b) kann das Wasser mit den aus dem methanhaltigen Naturgas aufgenommen unerwünschten Gasen, beispielsweise Schwefelwasserstoff (H₂S) und Kohlendioxid (CO₂), für einen weiteren Schritt a) dem Entgasungsmodul 2 direkt wieder zugeführt werden, oder zunächst zu dem Wassertank 3 geleitet werden. Dadurch kann das Wasser in der Anlage in einem Kreislauf gefahren werden. Die erfindungsgemäße Anlage und das erfindungsgemäße Verfahren sparen daher Wasser und Energie.

Neben Kohlendioxid (CO₂) kann mit diesem Verfahren auch Schwefelwasserstoff (H₂S) aus dem methanhaltigen Naturgas entfernt werden. Beide Gase werden im Rahmen der Erfindung als "unerwünschte Gase" bezeichnet, d.h. Gase die den Reinheitsgrad des Naturgases verschlechtern können. Für die Entfernung von Schwefelwasserstoff (H₂S) kann die Anlage die dafür notwendige Messtechnik aufweisen, die in dem Verfahren dann zum Einsatz kommt.

Die erfindungsgemäße Anlage und das erfindungsgemäße Verfahren weisen eine Reihe von technischen Vorteilen auf. Beispielsweise kann das Verfahren auf den Einsatz von Chemikalien verzichten. Das Verfahren kann also ohne die Zugabe von Chemikalien durchgeführt werden. Ein weiterer technischer Vorteil der erfindungsgemäßen Anlage und des erfindungsgemäßen Verfahrens ist, dass bei der Durchführung der Aufbereitung des methanhaltigen Naturgases keine Abfälle oder Abwässer entstehen. Die Anlage und das Verfahren sind daher umweltschonend und kostensparend. Ein weiterer technischer Vorteil der erfindungsgemäßen Anlage und des erfindungsgemäßen Verfahrens ist, dass die Anlage und das Verfahren mit niedrigen Drücken arbeiten können und somit der Energiebedarf vergleichsweise gering ist. Die Anlage und das Verfahren benötigen nur Wasser und elektrische Energie und sind daher umweltschonend und kostensparend. Dazu kommt, dass die erfindungsgemäße Anlage einfach zu bedienen und wartungsarm ist.

Die Erfindung macht sich außerdem zu nutze, dass der zusätzliche Verfahrensschritt der Entsalzung oder Enthärtung des Kreislaufwassers vor dem Entgasungsmodul 1 und Schritt a) die Löslichkeit von Gasen in dem entsalzten Wasser erhöht. Die Löslichkeit von Gasen in Wasser ist erhöht, wenn dem Wasser Härte oder allgemein Salze entzogen werden. Die Verwendung von enthärtetem, salzarmem bzw. entsalztem Wasser ist für die Effizienz der erfindungsgemäßen Vorrichtung und des erfindungsgemäßen Verfahrens von großer Bedeutung. Weil das enthärtetem, salzarme bzw. entsalzte Wasser in der Vorrichtung im Kreislauf gefahren wird und somit nur zum Start der Anlage in einen Wassertank 3 gefüllt wird, kann das Wasser mit einer kleinen mobilen Wasseraufbereitung entsalzt werden. Diese Komponente bzw. dieser Schritt kann dem Entgasungsmodul 1 und/oder Riesler 10 bzw. Schritt a) vorgeschaltet sein. Die Möglichkeit der Verwendung einer kleinen, mobilen Anlage zur Entsalzung oder Enthärtung des Wassers vor dem Entgasungsmodul 1 und/oder Riesler 10, und bevorzugt vor dem Wassertank 3 der Anlage bzw. vor dem Schritt a) des erfindungsgemäßen Verfahrens, ist ein weiterer Vorteil der Erfindung.

Vor Durchführung des erfindungsgemäßen Verfahrens im größeren Maßstab kann die erfindungsgemäße Anlage in einem kleineren Maßstab betrieben werden. Dabei kann eine Pilotanlage in einem kleineren Maßstab betrieben werden, die nur mit einem Teilstrom des methanhaltigen Naturgases arbeitet. Der Teilstrom des Naturgases wird dabei gereinigt und untersucht, um die Anlage dann auf großtechnische Einsätze auslegen zu können. Dabei kann der Anlage in Schritt b) des Verfahrens zu reinigendes methanhaltiges Naturgas zugeführt werden, dass bereits gefiltert, entschwefelt und getrocknet ist.

Die einzelnen Verfahrensparameter des erfindungsgemäßen Verfahrens können bei der Durchführung des Verfahrens angepasst werden. Dadurch kann der Methangehalt des Verfahrensproduktes, also des gereinigten Naturgases, immer weiter verbessert werden.

Folgende Parameter der erfindungsgemäßen Anlage bzw. des erfindungsgemäßen Verfahrens (Verfahrensparameter) können variiert werden: Kreislaufwasservolumenstrom, Kreislaufwassersalzgehalt, Kreislaufwasserdruck, Strippgasvolumenstrom, Strippgasunterdruck, Naturgasvolumenstrom, Naturgasdruck und Temperatur des Kreislaufwassers.

Im Folgenden werden die Eigenschaften der einzelnen Komponenten der erfindungsgemäßen Anlage und des erfindungsgemäßen Verfahrens genauer beschrieben.

### a) Wassertank 3

Die erfindungsgemäße Anlage kann einen Wassertank 3 aufweisen. Das nutzbare Füllvolumen des Wassertanks kann im Bereich von 500 bis 2000 Litern liegen. Besonders bevorzugt kann der Wassertank 3 ein nutzbares Füllvolumen von 1000 Litern aufweisen. Das Volumen des Wassertanks 3 kann aber auch entsprechend den Anforderungen an die Anlage angepasst werden, also vergrößert oder verkleinert werden. Der Wassertank 3 befindet sich bevorzugt vor der Umwälzpumpe 4 und weiterhin bevorzugt nach der Enthärtungs- oder Entsalzungsanlage. Das bedeutet, dass das aus der Enthärtungs- oder Entsalzungsanlage austretende entsalzte Wasser über einen Anschluss in den Wassertank 3 eintreten kann und dort gesammelt werden kann, bevor es den Wassertank 3 über einen Ausgang verlässt und mit Hilfe der Umwälzpumpe 4 dem Entgasungsmodul 1 oder Riesler 10 zugeleitet wird. Der Wassertank 3 kann einen weiteren Anschluss aufweisen, über den aus dem Gasaustauschmodul 2 zurückkehrendes Wasser, welches unerwünschte Gase aus dem methanhaltigen Naturgas aufgenommen hat, in den Wassertank 3 wieder eintreten kann.

### b) Umwälzpumpe 4

Die Umwälzpumpe 4 kann Wasser im Kreislauf der erfindungsgemäßen Anlage fortbewegen. Dabei pumpt die Umwälzpumpe 4 Wasser, bevorzugt aus einem Wassertank 3 oder bevorzugt direkt aus der Entsalzungsanlage, in das Entgasungsmodul 1 und von dort über das Gasaustauschmodul 2 zurück zum Anfang des Kreislaufs, also bevorzugt zurück zu dem Wassertank 3. Die Umwälzpumpe 4 kann eine Druckerhöhungspumpe sein. Weiterhin kann die Umwälzpumpe 4 frequenzgeregelt sein. Durch die Umwälzpumpe 4 kann der Kreislaufwasserdruck und der Volumenstrom eingestellt werden.

### c) Entgasungsmodul 1 und Gasaustauschmodul 2

Die erfindungsgemäße Anlage umfasst wenigstens ein Entgasungsmodul 1 und/oder wenigstens einen Riesler 10 und wenigstens ein Gasaustauschmodul 2. Beide Module umfassen eine wasserundurchlässige, gasdurchlässige, mikroporöse Membran, welche bevorzugt Hohlfasermembran ist. In einer bevorzugten Ausführungsform sind das Entgasungsmodul 1 und das Gas 2 vom gleichen Typ. In bevorzugten Ausführungsformen sind das Entgasungsmodul 1 und das Gasaustauschmodul 2 jeweils das Gasaustauschmodul Liqui-Cel® der Firma Membrana (Membrana, Charlotte, NC, USA).

### d) Vakuumpumpe 6

In einer Ausführungsform der erfindungsgemäßen Anlage kann wenigstens eine Vakuumpumpe 6 einen Unterdruck auf der Gasseite des Entgasungsmoduls 1 erzeugen. Dadurch wird bevorzugt Luft über einen Luftfilter 5 durch das Entgasungsmodul 1 gesogen. Die gefilterte Luft strömt in Richtung des Vakuums und nimmt dabei als "Strippgas" an den Poren der mikroporösen Membran die im Wasser gelösten Gase auf. Anstelle von Luft kann auch beispielsweise Stickstoff als "Strippgas" verwendet werden, welches in Richtung des von der Vakuumpumpe 6 angelegten Vakuums strömt und dabei an den Poren der mikroporösen Membran die im Wasser gelösten Gase aufnimmt. Durch den durch die Vakuumpumpe 6 angelegten Unterdruck kann das Partialdruckgefälle von der Wasserseite der Membran in Richtung der Strippgas/Vakuumseite der Membran eingestellt werden.

In einer weiteren Ausführungsform der erfindungsgemäßen Anlage können zwei oder mehr Vakuumpumpen 6 einen Unterdruck auf der Gasseite der Entgasungsmodul 1 erzeugen. Mit der oder den zwei oder mehr Vakuumpumpen 6 kann der Druck und der Volumenstrom des Strippgases eingestellt werden.

### e) Luftfilter 5

In einer weiteren Ausführungsform der vorliegenden Erfindung kann die Anlage einen oder mehrere Luftfilter 6 aufweisen, der bevorzugt ein Feinfilter ist. Der Luftfilter 5 hat die Funktion, am Eingang des Entgasungsmoduls 1 für das Strippgas, welches bevorzugt Luft oder Stickstoff ist, den Eintrag von Partikeln in das Entgasungsmodul 1 zu verhindern und somit die Gasseite des Entgasungsmoduls 1 vor Verschmutzung zu schützen. In einer bevorzugten Ausführungsform weist die Anlage am Eintritt des Strippgases in das Entgasungsmodul 1 zwei Luftfilter auf, die bevorzugt Feinfilter sind.

### f) Instrumentierung

Die erfindungsgemäße Anlage kann die installierte Messtechnik aufweisen, wie sie im Folgenden in **Tabelle 1** aufgelistet ist:

**Tabelle 1: Installierte Messtechnik der Anlage. Es werden die Parameter Druck, Durchfluss, Leitfähigkeit, pH-Wert, Methan, Temperatur und Wasserhärte gemessen.**

| **Parameter** | **Messstelle** | **Art der Übertragung** | **Beschreibung** |
|---|---|---|---|
| Druck | PI CP001 | Analog | Regelparameter für Feedpumpe |
| Druck | PI CP002 | Manuell | Druck Wasser vor Entgasung |
| Druck | PI CP003 | Manuell | Druck Wasser hinter Entgasung |
| Druck | PI CP004 | Manuell | Druck Wasser vor Gasreinigung |
| Druck | PI CP005 | Manuell | Druck Wasser hinter Gasreinigung |
| Druck | PI CO010 | Manuell | Druck Strippgas vor Entgasung |
| Druck | PI CO011 | Manuell | Druck Strippgas hinter Entgasung |
| Druck | PI CO012 | Manuell | Druck Naturgas vor Gasreinigung |
| Druck | PI CO013 | Manuell | Druck Naturgas hinter Gasreinigung |
| Durchfluss | FI CF001 | Manuell | Durchfluss Strippgas |
| Durchfluss | FI CF002 | Manuell | Durchfluss Wasser |
| Durchfluss | FI CF003 | Manuell | Durchfluss Naturgas |
| Durchfluss | FI CF004 | Manuell | Durchfluss Methangas |
| Leitfähigkeit | LF CQ 001 | Analog | Leitfähigkeit Wasser hinter Entgasung |
| Leitfähigkeit | LF CQ 002 | Analog | Leitfähigkeit Wasser hinter Gasreinigung |
| pH-Wert | QI CQ 001 | Analog | pH-Wert Wasser hinter Entgasung |
| Methan | QI CQ003 | Analog | Methangasgehalt im Naturgas vor und nach Gasreinigungsmodul |
| pH Wert | QI CQ004 | Analog | pH-Wert im Rezirkulationsbehälter sowie hinter der Entgasung |
| Temperatur | TI CT001 | Analog | Temperatur Wasser hinter Entgasung |
| Temperatur | TI CT002 | Analog | Temperatur Wasser hinter Gasreinigung |
| Wasserhärte | | Manuell | Härtegrad des Wassers im Rezirkulationsbehälter |

Im Folgenden werden weitere technische Eigenschaften der erfindungsgemäßen Vorrichtung und des erfindungsgemäßen Verfahrens beschrieben, sowie deren Überwachung (Monitoring) und Optimierung.

Im Kreislaufwasser können die Parameter pH-Wert, Druck über die Membrankontaktoren, Volumenstrom über die Membrankontaktoren, Leitfähigkeit, Härtegrad und Temperatur gemessen werden.

Im Naturgas können die Parameter Volumenstrom, Temperatur, Druck über Membrankontaktoren und Methangasgehalt gemessen werden.

Im Strippgas kann der Reinheitsgrad in Bezug auf das Vorhandensein von CO₂ gemessen werden.

### Entgasungsmodul 1 und Schritt a): Entgasung an wenigstens einem Entgasungsmodul 1

Entgasungsmodul 1 und Schritt a) der Erfindung hat eine möglichst vollständige Entfernung des im Kreislaufwasser gelösten Kohlendioxids (CO₂ zum Ziel. Ein möglichst hoher Stoffübergang von CO₂ aus der wässrigen Lösung in die Gasphase sollte hierfür erreicht werden.

Für eine erfolgreiche Entgasung an dem Entgasungsmodul 1 der Anlage und in Schritt a) des erfindungsgemäßen Verfahrens können folgende Parameter optimiert werden:
1) Turbulente Überströmung des Wassers über das Entgasungsmodul. Hier gewährleistet die Messung der Durchflussmenge die Regelung der Strömungsverhältnisse.
2) Salzgehalt des Wassers: Der Salzgehalt des Wassers ist entscheidend für die Aufnahmekapazität an gelösten Gasen.
3) Einstellung des pH-Wertes: Hier kann die Messung des pH-Wertes im Zu- und Ablauf des Moduls durchgeführt werden.
4) Regelung der Wassertemperatur: Die Temperatur kann im Kreislaufwasser gemessen werden. Gegebenenfalls ist der Einsatz von Wärmetauschern notwendig.
5) Variation des Strippgases: Als Strippgas können Umgebungsluft (gefiltert) sowie reiner Stickstoff, sowie eine Mischung der beiden Gase zum Einsatz kommen. Der Volumenstrom des Strippgases kann optimal für den Abtransport der aus dem Wasser in das Strippgas übertretenden Gase angepasst werden. Durch den durch die Vakuumpumpe 6 angelegten Unterdruck kann das Partialdruckgefälle von der Wasserseite der Membran in Richtung der Strippgas/Vakuumseite der Membran eingestellt werden.

In einer alternativen Ausführungsform der Erfindung erfolgt die Entgasung in Schritt a) mit einem Riesler 10 an Stelle des Entgasungsmoduls 1. Ebenfalls mit dem Ziel einer möglichst vollständige Entfernung des im Kreislaufwasser gelösten Kohlendioxids (CO₂) Auch dabei soll möglichst hoher Stoffübergang von CO₂ aus der wässrigen Lösung in die Gasphase sollte hierfür erreicht werden. Der Vorteil des Rieslers 10 gegenüber dem Entgasungsmoduls 1 besteht nicht zuletzt darin, dass auf die im Entgasungsmodul erforderliche kostenträchtige Membran verzichtet werden kann. Riesler sind im Rahmen der vorliegenden Erfindung insbesondere dann geeignet, wenn der Methangehalt im erfindungsgemäßen Verfahren von unter 60% im Naturgas, beispielsweise um 50%, auf lediglich leicht darüber liegende Werte, vorzugsweise 60-80%, weiter vorzugsweise 60-70%, besonders bevorzugt um 65% angehoben werden soll.

Ein beispielhafter Riesler wird nachfolgend kurz beschrieben. Der Riesler besteht aus einer Kolonne zur Verrieselung und Versprühung des kohlensäurehaltigen Wasser und einem integrierten Auffangbehälter, der gleichzeitig als Pumpenvorlage dient. Das kohlensäurehaltige Wasser von oben in den Riesler geführt, über eine Vollkegelspiraldüse versprüht und anschließend über die sich in der Rieselkolonne befindende Pall-Ring-Füllung geleitet. Durch die Bauart der Füllkörper ergeben sich häufige Umbildungen der Oberflächen, durch welche die im Wasser eingeschlossenen Gase freigesetzt werden. Im Gegenstrom, von unten nach oben, wird ein von einem Ventilator erzeugter starker Luftstrom durch die Kolonne geleitet, der die freigewordenen Gase abführt. Hierdurch lässt sich der Gehalt an freier Kohlensäure auf deutlich reduzieren.

Das kohlensäurearme Wasser wird in einem Wassertank 3 gesammelt und über Förderpumpen dem Gasaustauschmodul 2 zugeführt.

### Gasaustauschmodul 2 und Schritt b): Gasaustausch an wenigstens einem Gasaustauschmodul 2

Gasaustauschmodul 2 der erfindungsgemäßen Anlage und Schritt b) des erfindungsgemäßen Verfahrens "b) Gasaustausch an wenigstens einem Gasaustauschmodul 2" führen die Aufreinigung des methanhaltigen Naturgases durch. In dieser Gasreinigungsstufe findet die Aufreinigung des aufzubereitenden Naturgases statt. Ein möglichst hoher Stoffübergang von unerwünschten Gasen, wie beispielsweise Kohlendioxid (CO₂) und Schwefelwasserstoff (H₂S), aus dem methanhaltigen Naturgas in die wässrige Phase des zugeleiteten entsalzten und entgasten Kreislaufwassers ist hier das Ziel.

Für eine erfolgreiche Entfernung solcher unerwünschter Gase aus dem methanhaltigen Naturgas können folgende Parameter optimiert werden:
1) Überströmgeschwindigkeit und Menge des Naturgases: Hier kann die Menge und die Messung des eintretenden und austretenden Naturgasvolumenstroms reguliert werden. Das Naturgas kann mit einem Überdruck von 50 mbar bis 1000 mbar, bevorzugt von 300 mbar bis 400 mbar im Gegenstrom zum Wasser durch das Gasaustauschmodul 2 gepumpt werden.
2) Maximale Konzentrationsgradienten an der Phasengrenze an den Poren der mikroporösen Membran:
   Hier geht es um die optimale Entfernung von Kohlendioxid (CO₂) im vorangehenden Schritt a) Entgasung an dem Entgasungsmodul 1, so dass im Naturgas enthaltenes Kohlendioxid an der mikroporösen Membran im Gasaustauschmodul 2 in das entgaste Wasser übergeht.

### Beispiele

### Beispiel 1

In Beispiel 1 wurde die erfindungsgemäße Anlage getestet, wobei der Methangehalt des methanhaltigen Naturgases, hier Biogases, in Abhängigkeit vom Wasservolumenstrom gemessen wurde.

In zwei Testreihen wurde die Auswirkung verschiedener Wasservolumenströme auf den Methangehalt im Biogas am Ausgang des Gasaustauschmoduls 2 getestet. Die übrigen Randbedingungen, insbesondere der Biogasvolumenstrom, wurden für die Dauer des Versuchs konstant gehalten. Sie sind in **Tabelle 2** dargestellt. In einem zweiten Schritt wurde der Unterdruck im Strippgas bei konstanten Randbedingungen variiert.

### Ergebnisse

Die Ergebnisse von Beispiel 1 sind in **Figur 5** und in **Tabelle 2** dargestellt.

**Tabelle 2: Konstante Randbedingungen der Beispiele Bsp 1.1 und Bsp 1.2**

| Messstelle | Klartextbezeichnung | Einheit | Bsp 1.1 | Bsp 1.2 |
|---|---|---|---|---|
| | Frequenz Umwälzpumpe 4 | [Hz] | 25 | 25 |
| PI CP001 | Druck Wasser vor Entgasung | [bar] | 0, 84 | 0, 84 |
| PI CP002 | Druck Wasser vor Entgasung | [bar] | 0, 6 | 0, 6 |
| PI CP005 | Druck Wasser hinter Begasung | [bar] | 0,4 | 0,4 |
| PI CP011 | Druck Strippgas hinter Entgasung | [bar] | -0,8 Unterdruck | -0,6 Unterdruck |
| LF CQ002 | Leitfähigkeit Wasser hinter Begasung | [µS/cm] | 231 | 288 |
| TI CT002 | Temperatur Wasser hinter Begasung | [°C] | 8,1°C | 8, 8 |
| FI CF003 | Volumenstrom Biogas | [Nm³/h] | 4,8 | 5,5 |

Es zeigt sich ein deutlicher Zusammenhang zwischen der Effektivität in der Entfernung von unerwünschten Gasen, wie beispielsweise Schwefelwasserstoff (H₂S) und Kohlendioxid (CO₂), und dem Wasservolumen, mit welchem die Membranen überströmt werden. Ursachen hierfür sind sowohl hydraulischer als auch chemischer Natur.

### Beispiel 2

In Beispiel 2 wurde die erfindungsgemäße Anlage getestet, wobei der Methangehalt des Naturgases, hier Biogases, in Abhängigkeit vom Volumenstrom des Biogases gemessen wurde.

In zwei Testreihen wurde die Auswirkung verschiedener Biogasvolumenströme auf den Methangehalt im Biogas am Ausgang des Gasaustauschmoduls 2 getestet. Die übrigen Randbedingungen, insbesondere der Wasservolumenstrom, wurden für die Dauer des Versuchs konstant gehalten. Sie sind in **Tabelle 3** dargestellt. In einem zweiten Schritt wurde der Unterdruck im Strippgas bei konstanten Randbedingungen variiert.

### Ergebnisse

Die Ergebnisse von Beispiel 2 sind in **Figur 6** und in **Tabelle 3** dargestellt.

**Tabelle 3: Konstante Randbedingungen der Beispiele Bsp 2.1 und Bsp 2.2**

| Messstelle | Klartextbezeichnung | Einheit | Bsp 2.1 | Bsp 2.2 |
|---|---|---|---|---|
| | Frequenz Umwälzpumpe 4 | [Hz] | 25 | 25 |
| PI CP001 | Druck Wasser vor Entgasung | [bar] | 0, 84 | 0, 84 |
| PI CP002 | Druck Wasser vor Entgasung | [bar] | 0, 6 | 0, 6 |
| PI CP005 | Druck Wasser hinter Begasung | [bar] | 0,4 | 0,4 |
| PI CP011 | Druck Strippgas hinter Entgasung | [bar] | -0,8 Unterdruck | -0,6 Unterdruck |
| QI LF002 | Leitfähigkeit Wasser hinter Begasung | [µS/cm] | 330 | 290 |
| TI CT002 | Temperatur Wasser hinter Begasung | [°C] | 8,1 | 8, 8 |
| FI CF002 | Volumenstrom Wasser | [m³/h] | 7,5 | 8,3 |

Die Betriebsparameter der Versuche der Beispiele 1 und 2 sind in **Tabelle 4** gezeigt:

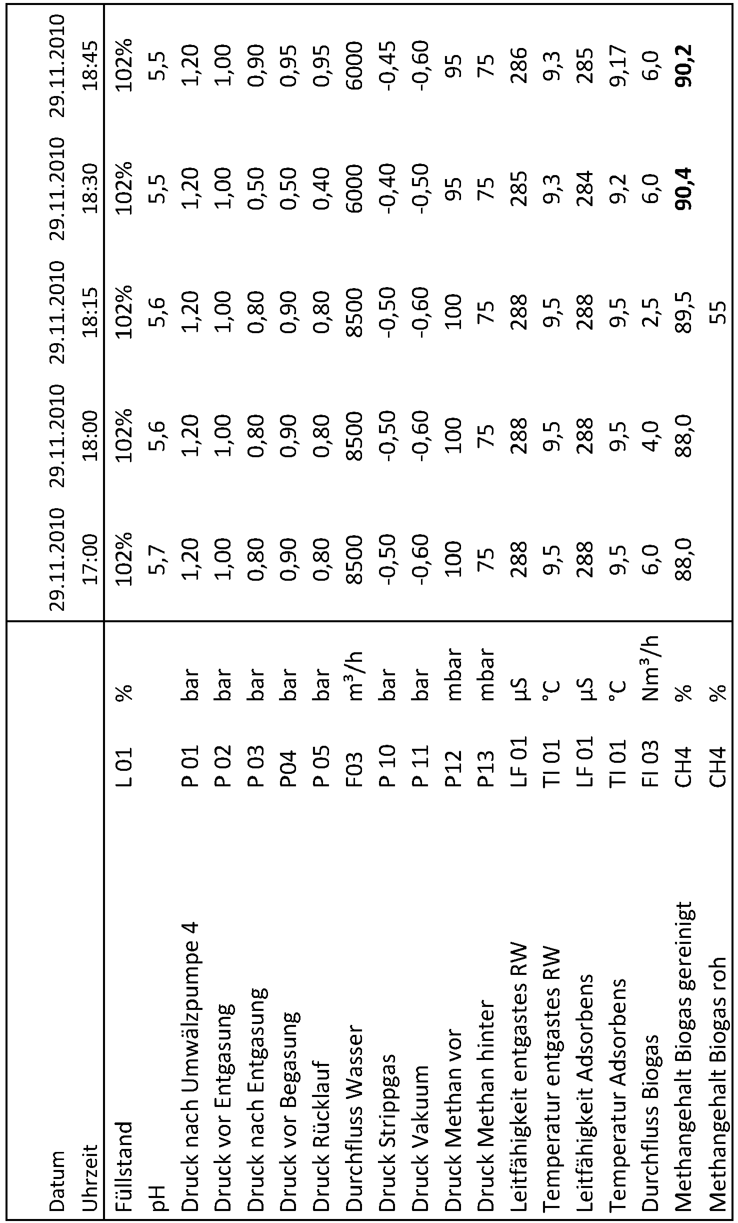

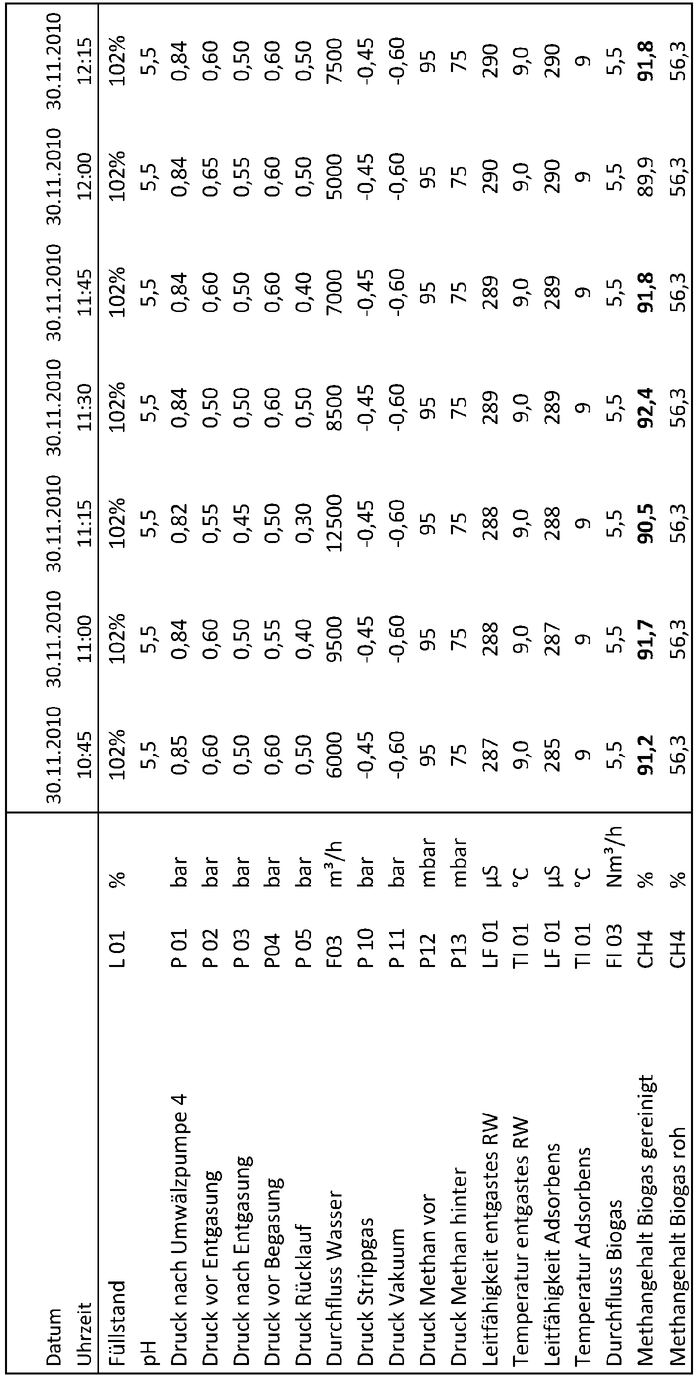

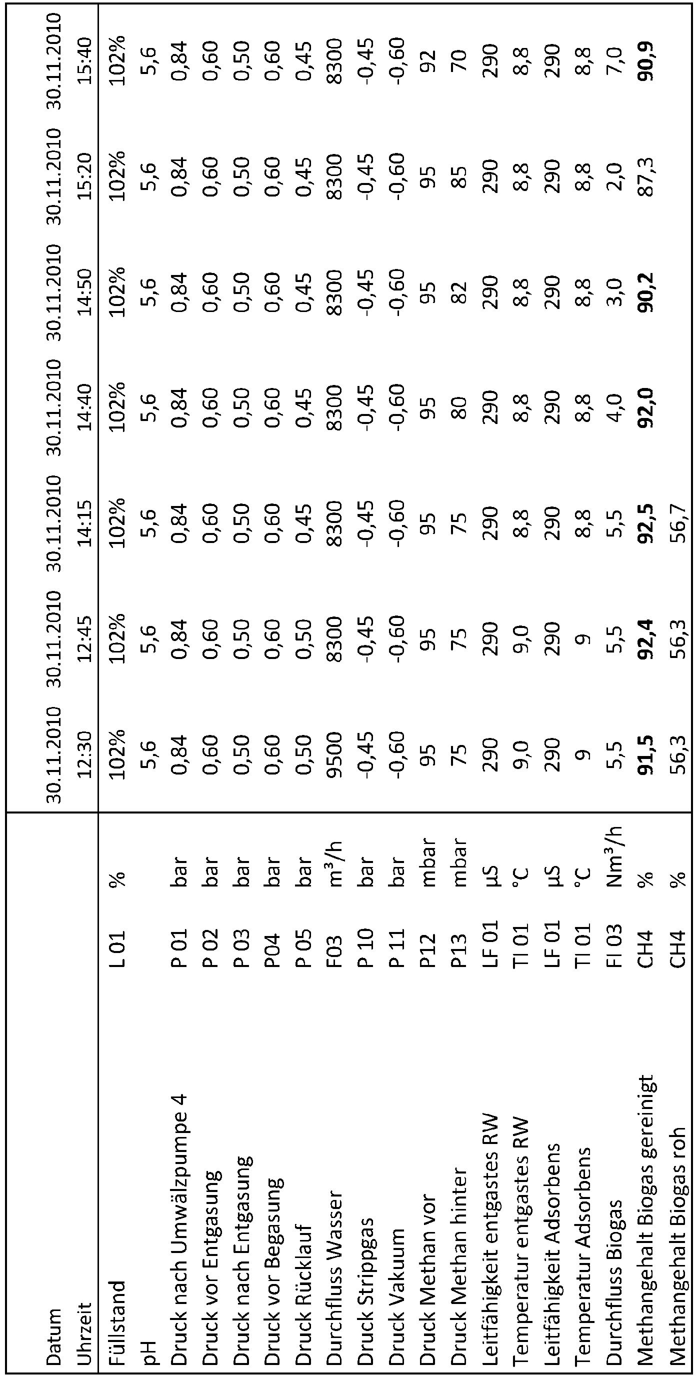

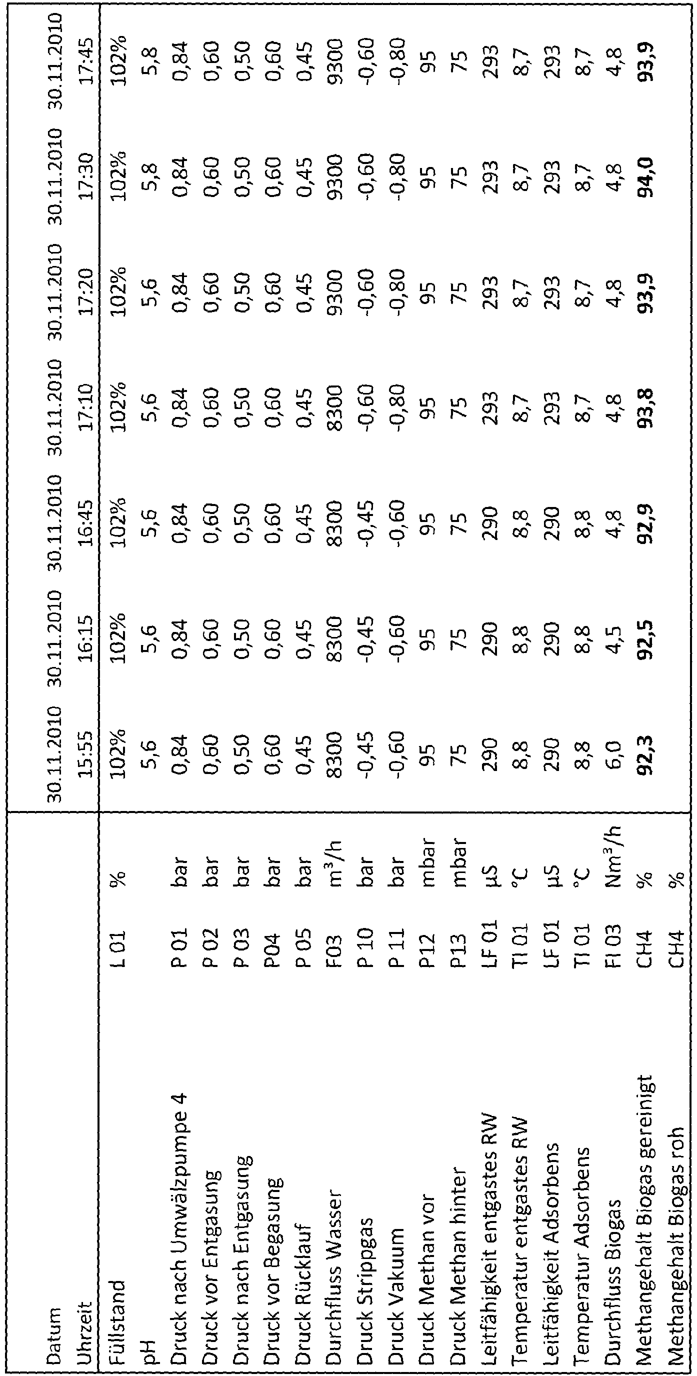

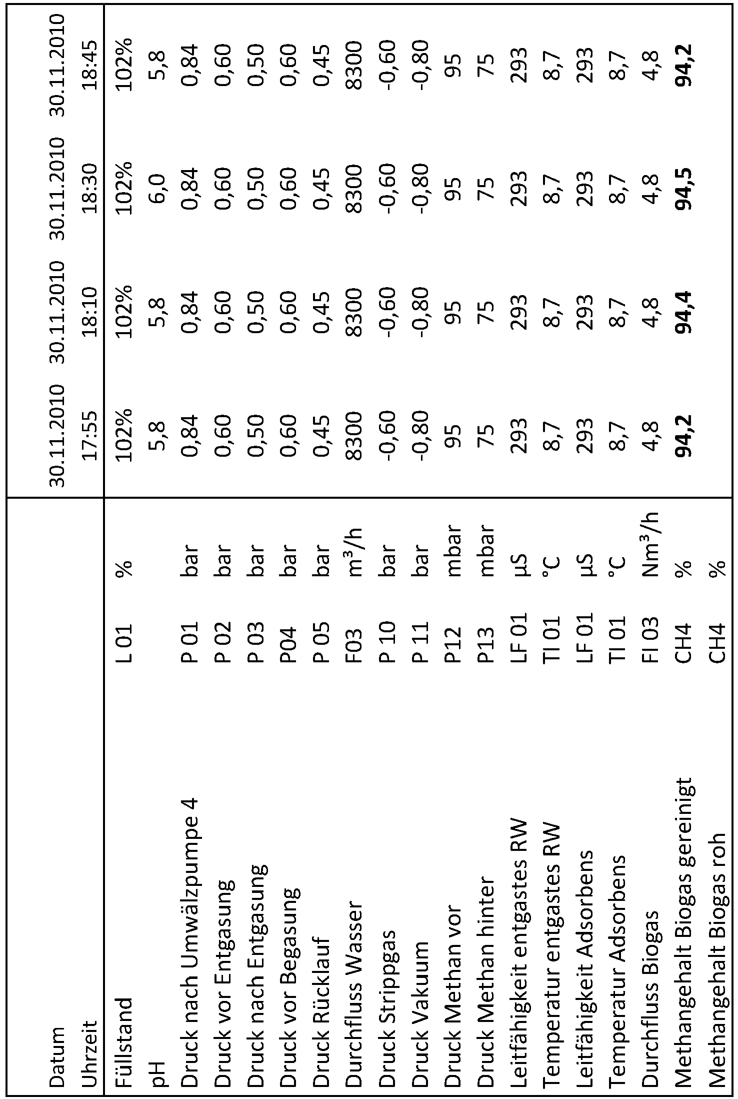

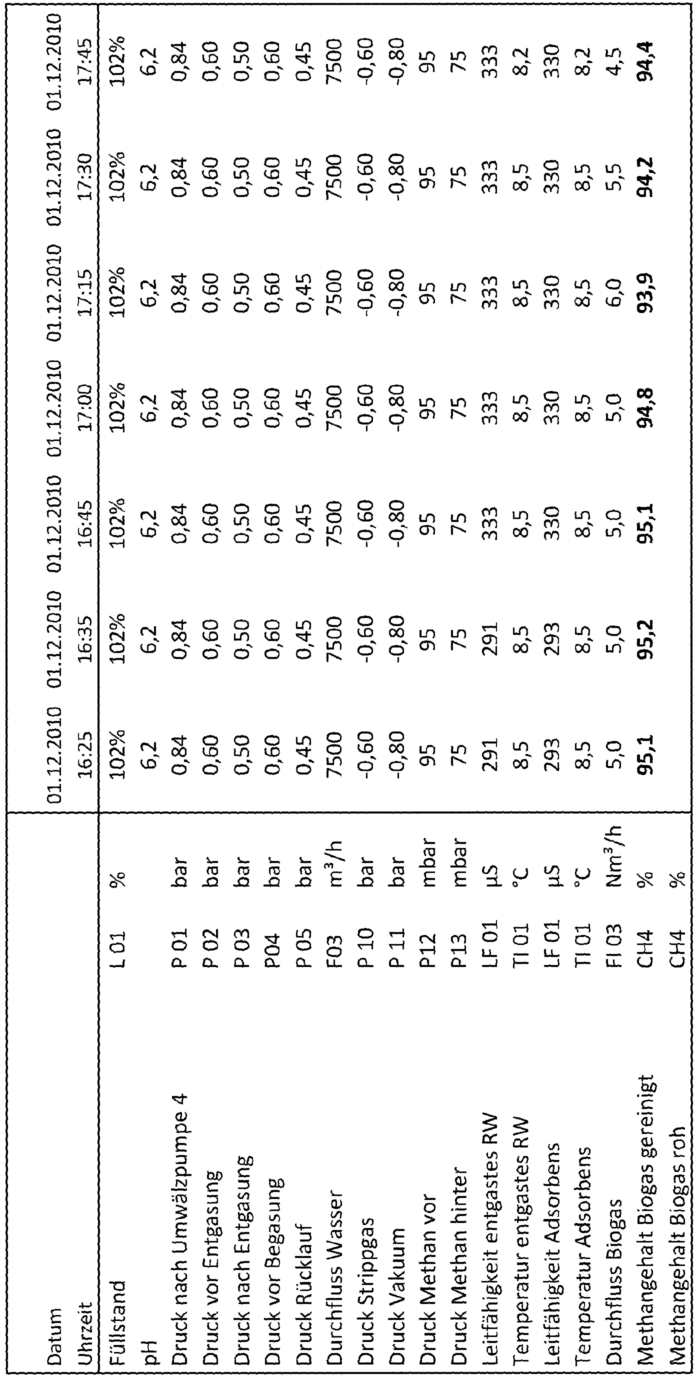

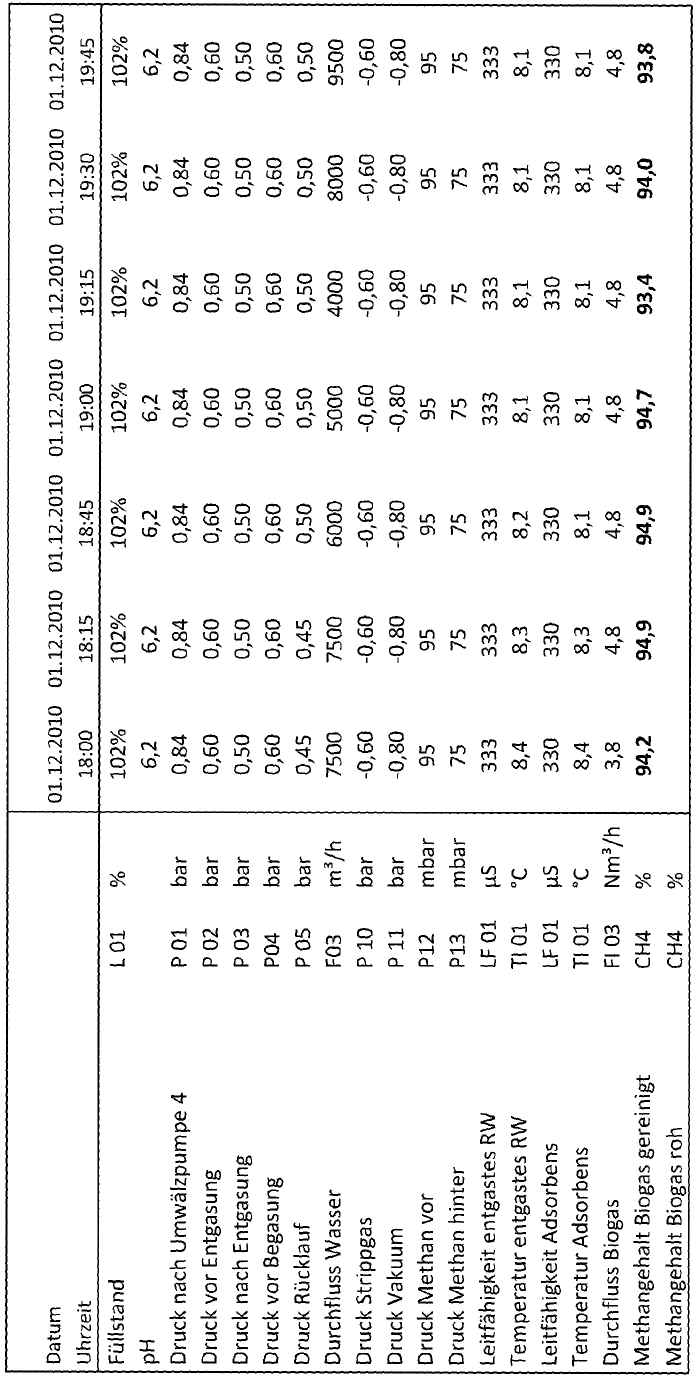

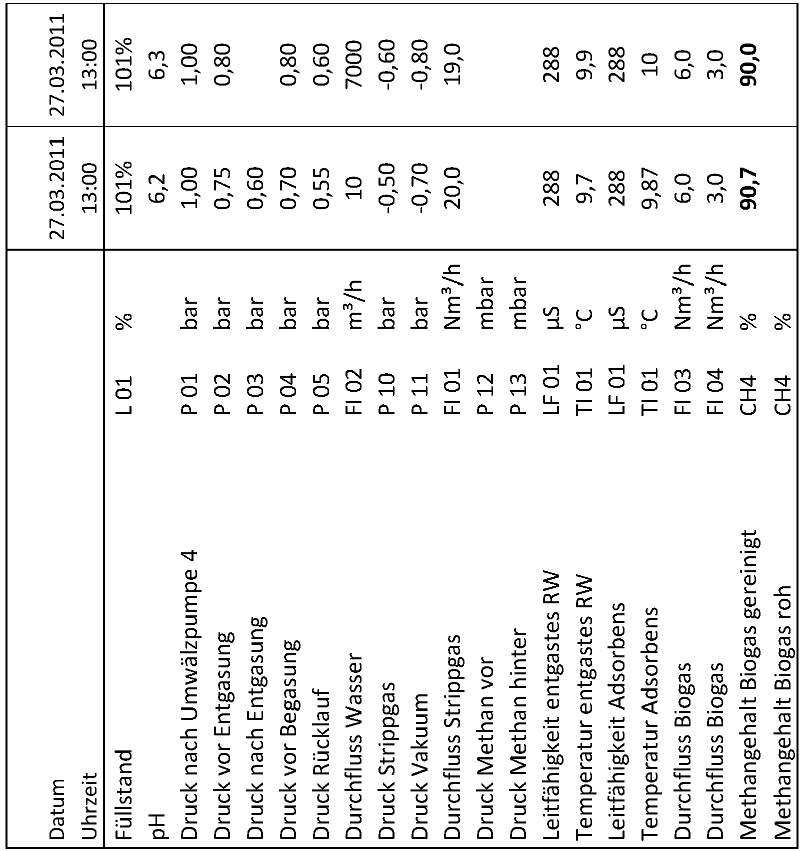

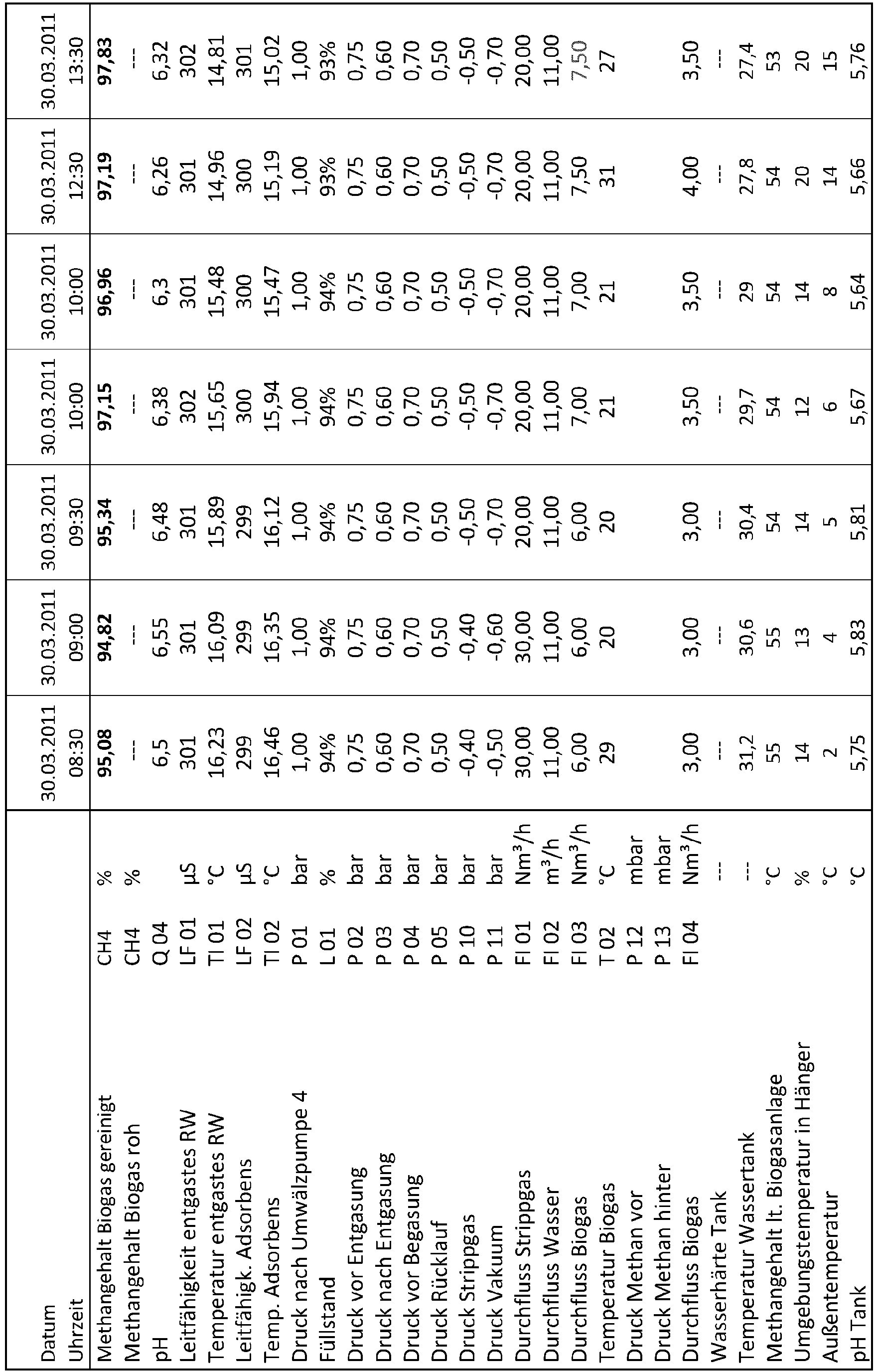

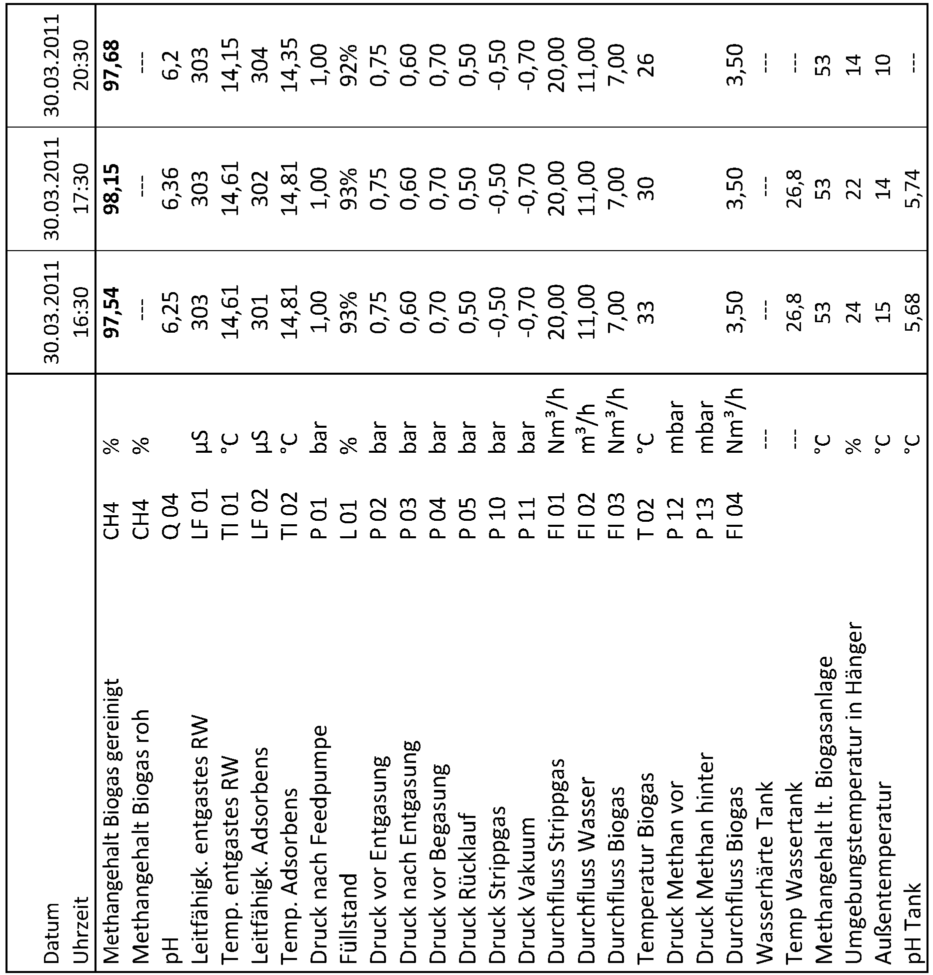

Es zeigt sich ein deutlicher Zusammenhang zwischen dem Biogasvolumen, mit welchem die Membran im Gasaustauschmodul 2 überströmt wird und der Effektivität in der Entfernung von unerwünschten Gasen aus dem aufzubereitendem Biogas, wie beispielsweise Schwefelwasserstoff (H₂S) und Kohlendioxid (CO₂). Für die Effektivität maßgeblich sind sowohl die Partialdrücke der einzelnen Komponenten des Biogases, als auch die an der Oberfläche der Membran herrschenden Strömungsverhältnisse.

Die Erfindung und die oben beschriebenen Beispiele haben gezeigt, dass eine Anlage und ein Verfahren der hierin beschriebenen Art besonders dazu geeignet sind, methanhaltiges Naturgas wie beispielsweise Biogas so aufzubereiten, dass es einen erhöhten Methangehalt aufweist.

## Patentansprüche

1. Anlage zur Aufbereitung von methanhaltigen Naturgas umfassend:
a) wenigstens ein Entgasungsmodul (1) umfassend eine wasserundurchlässige und gasdurchlässige Membran, und/oder wenigstens einen Riesler (10), und
b) wenigstens ein Gasaustauschmodul (2) umfassend eine wasserundurchlässige und gasdurchlässige Membran,
c) einen Wasserkreislauf enthaltend Wasser, der das Entgasungsmodul (1) und/oder den Riesler (10) und das Gasaustauschmodul (2) verbindet, die in Strömungsrichtung des Wassers (11) hintereinander angeordnet sind,
wobei das Wasser (11) in dem Entgasungsmodul (1) durch Übergang von im Wasser gelösten unerwünschten Gasen in eine Gasphase auf der anderen Seite der Membran und/oder in dem Riesler (10) durch Übergang von im Wasser gelösten unerwünschten Gasen in eine Gasphase entgast wird und das entgaste Wasser in dem Gasaustauschmodul (2) unerwünschte Gase aus zugeführtem methanhaltigen Naturgas durch Übergang der unerwünschten Gase in die wässerige Phase auf der anderen Seite der Membran aufnimmt, und
wobei das zugeführte Naturgas im Gegenstrom zu dem entgasten Wasser (11) dem wenigstens einen Gasaustauschmodul (2) zugeführt wird,
**dadurch gekennzeichnet,**
**dass** in den Wasserkreislauf gegebene Wasser (11)entsalztes Wasser mit einer Leitfähigkeit kleiner als 500 µS/cm ist.

2. Anlage nach Anspruch 1, **dadurch gekennzeichnet, dass** das wenigstens eine Entgasungsmodul (1) und das wenigstens eine Gasaustauschmodul(2) jeweils eine Hohlfaserentgasungsmembran umfassen.

3. Anlage nach Anspruche 1 oder 2, **dadurch gekennzeichnet, dass** die Anlage weiterhin wenigstens einen Wassertank (3) umfasst, der vor dem Entgasungsmodul (1) und/oder hinter dem Riesler (10) angeordnet ist und das entsalzte Wasser (11) für den Wasserkreislauf bereitstellt.

4. Anlage nach einem der Ansprüche 1 bis 3, **dadurch gekennzeichnet, dass** die Anlage weiterhin wenigstens eine Vakuumpumpe (6) umfasst, die an dem Entgasungsmodul (1) ein Vakuum anlegt.

5. Anlage nach einem der Ansprüche 1 bis 4, **dadurch gekennzeichnet, dass** die Anlage weiterhin wenigstens eine Vorrichtung zur Entschwefelung (7) aufweist, die vor dem Gasaustauschmodul (2) angeordnet ist, wobei die Vorrichtung zur Entschwefelung (7) bevorzugt ein Aktivkohlefilter ist.

6. Anlage nach einem der Ansprüche 1 bis 5, **dadurch gekennzeichnet, dass** die Anlage weiterhin wenigstens einen Verdichter (9) aufweist, der das aufzubereitende methanhaltige Naturgas verdichtet und der bevorzugt vor dem Gasaustauschmodul (2) angeordnet ist, und der bevorzugt mit einem Gerät zur Messung des Drucks des Naturgases in operativer Verbindung steht.

7. Anlage nach einem der Ansprüche 1 bis 6, **dadurch gekennzeichnet, dass** dem Entgasungsmodul (1) wenigstens eine Entsalzungsanlage vorgeschaltet ist, die bevorzugt mobil ist, und die sich bevorzugt vor dem Wassertank (3) befindet.

8. Anlage nach einem der Ansprüche 1 bis 7, **dadurch gekennzeichnet, dass** das wenigstens eine Entgasungsmodul (1) oder/oder der wenigstens eine Riesler (10) und das wenigstens eine Gasaustauschmodul (2) räumlich getrennt sind.

9. Anlage nach einem der Ansprüche 1 bis 8, **dadurch gekennzeichnet, dass** dem wenigstens einen Entgasungsmodul (1) wenigstens ein Riesler (10) vorgeschaltet ist, der vor der Entgasung des Wassers (11) in dem Entgasungsmodul (1) im Wasser (11) gelöste Gase zusätzlich entzieht.

10. Verwendung der Anlage der Ansprüche 1 bis 9 zur Aufbereitung von methanhaltigen Naturgas.

11. Verfahren zur Aufbereitung von methanhaltigen Naturgas, umfassend die Schritte:
a) Entgasung von Wasser (11) an wenigstens einem Entgasungsmodul (1) umfassend eine wasserundurchlässige und gasdurchlässige Membran, durch Übergang von im Wasser gelösten unerwünschten Gasen in eine Gasphase auf der anderen Seite der Membran, und/oder wenigstens einen Riesler (10),
wobei das Wasser zuvor entsalzt wird und die Leitfähigkeit des entsalzten Wassers kleiner als 500 µS/cm ist, und
b) Gasaustausch des entgasten Wassers (11) aus Schritt a) an wenigstens einem Gasaustauschmodul (2) umfassend eine wasserundurchlässige und gasdurchlässige Membran,
wobei im Gasaustauschmodul (2) im zugeführten methanhaltigen Naturgas enthaltene unerwünschte Gase aus der Gasphase des Naturgases auf der einen Seite der Membran in die wässrige Phase des entgasten Wassers (11) auf der anderen Seite der Membran übergehen,
wobei die Schritte a) und b) hintereinander durchgeführt werden, wobei das Entgasungsmodul (1) und/oder der Riesler (10) des Schrittes a) und das Gasaustauschmodul (2) des Schrittes b) in einem Wasserkreislauf verbunden sind und in Strömungsrichtung des Wassers (11) hintereinander angeordnet sind, und
wobei das methanhaltige Naturgas im Gegenstrom zu dem entgasten Wasser dem wenigstens einen Gasaustauschmodul (2) zugeführt wird.

12. Verfahren nach Anspruch 11, **dadurch gekennzeichnet, dass** die Leitfähigkeit des entsalzten Wassers kleiner als 400 µS/cm ist, bevorzugt kleiner als 300 µS/cm ist.

13. Verfahren nach Anspruch 12, **dadurch gekennzeichnet, dass** die Härte des entsalzten Wassers kleiner als 0,2 °dH ist, bevorzugt kleiner als 0,1 °dH ist und besonders bevorzugt kleiner als 0,05 °dH ist.

14. Verfahren nach einem der Ansprüche 11 bis 13, **dadurch gekennzeichnet, dass** die in Schritt b) aus dem methanhaltigen Naturgas entfernten unerwünschten Gase Schwefelwasserstoff (H₂S) und Kohlendioxid (CO₂) umfassen.

15. Verfahren nach einem der Ansprüche 11 bis 14, **dadurch gekennzeichnet, dass** der Methangehalt des aufbereiteten Naturgases nach Schritt b) größer als 80% ist, bevorzugt größer als 85% ist, weiterhin bevorzugt größer als 90% ist, besonders bevorzugt größer als 95% ist, und ganz besonders bevorzugt größer als 98% ist.

16. Verfahren nach einem der Ansprüche 11 bis 15, **dadurch gekennzeichnet, dass** das methanhaltige Naturgas vor dem Eintritt in das Gasaustauschmodul (2) in Schritt b) getrocknet und entschwefelt und/oder verdichtet wird, bevorzugt durch wenigstens einen Kondensator zur Trocknung (8) und wenigstens eine Vorrichtung zur Entschwefelung (7) und/oder wenigstens einen Verdichter (9).

17. Verfahren nach einem der Ansprüche 11 bis 16, **dadurch gekennzeichnet, dass** die Schritte a) und b) räumlich getrennt durchgeführt werden.

18. Verfahren nach einem der Ansprüche 11 bis 17, **dadurch gekennzeichnet, dass** das aufbereitete Naturgas (Methangas) nach Schritt b) getrocknet wird, bevor es die Anlage verlässt.

19. Verfahren nach einem der Ansprüche 11 bis 18, **dadurch gekennzeichnet, dass** es in der Anlage nach einem oder mehrerer der Ansprüche 1 bis 9 durchgeführt wird.

20. Verfahren nach einem der Ansprüche 11 bis 19, **dadurch gekennzeichnet, dass** der Entgasung von Wasser (11) an wenigstens einem Entgasungsmodul (1) in Schritt a) ein zusätzlicher Entgasungsschritt an wenigstens einem Riesler (10) vorgeschaltet ist, der vor der Entgasung des Wassers in dem Entgasungsmodul (1) im Wasser gelöste Gase zusätzlich entzieht.

## Claims

1. Plant for treating methane-containing gas from natural sources, which comprises:
a) at least one degassing module (1) comprising a water-impermeable and gas-permeable membrane, and/or at least one trickle tower (10) and
b) at least one gas exchange module (2) comprising a water-impermeable and gas-permeable membrane,
c) a water circuit containing water, which connects the degassing module (1) and/or the trickle tower (10) and the gas exchange module (2) which are arranged in series in the flow direction of the water (11),
where the water (11) is degassed in the degassing module (1) by passage of undesirable gases dissolved in the water into a gas phase on the other side of the membrane and/or in the trickle tower (10) by passage of the undesirable gases dissolved in the water into a gas phase and the degassed water takes up undesirable gases from the methane-containing gas from natural sources which is fed in in the gas exchange module (2) by passage of the undesirable gases into the aqueous phase on the other side of the membrane and
where the gas from natural sources which is fed in is introduced into the at least one gas exchange module (2) in countercurrent to the degassed water (11), **characterized in that**
water (11) fed into the water circuit is deionized water having a conductivity of less than 500 µS/cm.

2. Plant according to Claim 1, **characterized in that** the at least one degassing module (1) and the at least one gas exchange module (2) each comprise a hollow-fiber degassing membrane.

3. Plant according to Claim 1 or 2, **characterized in that** the plant further comprises at least one water tank (3) which is arranged upstream of the degassing module (1) and/or downstream of the trickle tower (10) and provides the deionized water (11) for the water circuit.

4. Plant according to any of Claims 1 to 3, **characterized in that** the plant further comprises at least one vacuum pump (6) which applies a vacuum to the degassing module (1).

5. Plant according to any of Claims 1 to 4, **characterized in that** the plant further comprises at least one apparatus for desulfurization (7) which is arranged upstream of the gas exchange module (2), where the apparatus for desulfurization (7) is preferably an activated carbon filter.

6. Plant according to any of Claims 1 to 5, **characterized in that** the plant further comprises at least one compressor (9) which compresses the methane-containing gas from natural sources which is to be treated and is preferably arranged upstream of the gas exchange module (2) and is preferably operationally connected to an instrument for measuring the pressure of the gas from natural sources.

7. Plant according to any of Claims 1 to 6, **characterized in that** at least one deionization plant which is preferably mobile and is preferably located upstream of the water tank (3) is installed upstream of the degassing module (1) .

8. Plant according to any of Claims 1 to 7, **characterized in that** the at least one degassing module (1) and/or the at least one trickle tower (10) and the at least one gas exchange module (2) are physically separated.

9. Plant according to any of Claims 1 to 8, **characterized in that** at least one trickle tower (10) which additionally removes gases dissolved in the water (11) before degassing of the water (11) in the degassing module (1) is installed upstream of the at least one degassing module (1).

10. Use of the plant according to Claims 1 to 9 for treating methane-containing gas from natural sources.

11. Process for treating methane-containing gas from natural sources, which comprises the steps:
a) degasification of water (11) in at least one degassing module (1) comprising a water-impermeable and gas-permeable membrane, by passage of undesirable gases dissolved in the water into a gas phase on the other side of the membrane, and/or at least one trickle tower (10),
wherein the water is deionized beforehand and the conductivity of the deionized water is less than 500 µS/cm, and
b) gas exchange of the degassed water (11) from step a) in at least one gas exchange module (2) comprising a water-impermeable and gas-permeable membrane,
with undesirable gases present in the methane-containing gas from natural sources which is fed in going over in the gas exchange module (2) from the gas phase of the gas from natural sources on one side of the membrane into the aqueous phase of the degassed water (11) on the other side of the membrane,
wherein steps a) and b) are carried out in succession, where the degassing module (1) and/or the trickle tower (10) of step a) and the gas exchange module (2) of step b) are connected in a water circuit and are arranged in series in the flow direction of the water (11) and
where the methane-containing gas from natural sources is introduced into the at least one gas exchange module (2) in countercurrent to the degassed water.

12. Process according to Claim 11, **characterized in that** the conductivity of the deionized water is less than 400 µS/cm, preferably less than 300 µS/cm.

13. Process according to Claim 12, **characterized in that** the hardness of the deionized water is less than 0.2°dH, preferably less than 0.1°dH and particularly preferably less than 0.05°dH.

14. Process according to any of Claims 11 to 13, **characterized in that** the undesirable gases removed from the methane-containing gas from natural sources in step b) comprise hydrogen sulfide (H2S) and carbon dioxide (CO2).

15. Process according to any of Claims 11 to 14, **characterized in that** the methane content of the treated gas from natural sources after step b) is greater than 80%, preferably greater than 85%, more preferably greater than 90%, particularly preferably greater than 95% and very particularly preferably greater than 98%.

16. Process according to any of Claims 11 to 15, **characterized in that** the methane-containing gas from natural sources is dried and desulfurized and/or compressed, preferably by means of at least one condenser for drying (8) and at least one apparatus for desulfurization (7) and/or at least one compressor (9) before entering the gas exchange module (2) in step b).

17. Process according to any of Claims 11 to 16, **characterized in that** steps a) and b) are carried out physically separately.

18. Process according to any of Claims 11 to 17, **characterized in that** the treated gas from natural sources (methane gas) after step b) is dried before leaving the plant.

19. Process according to any of Claims 11 to 18, **characterized in that** it is carried out in the plant according to one or more of Claims 1 to 9.

20. Process according to any of Claims 11 to 19, **characterized in that** the degassing of water (11) in at least one degassing module (1) in step a) is preceded by an additional degassing step in at least one trickle tower (10) which additionally removes gases dissolved in the water before degassing of the water in the degassing module (1).

## Revendications

1. Installation pour le traitement d'un gaz naturel contenant du méthane, comprenant:
a) au moins un module de dégazage (1), comprenant une membrane imperméable à l'eau et perméable aux gaz, et/ou au moins une unité de ruissellement (10), et
b) au moins un module d'échange de gaz (2), comprenant une membrane imperméable à l'eau et perméable aux gaz,
c) un circuit d'eau contenant de l'eau, qui relie le module de dégazage (11) et/ou l'unité de ruissellement (10) et le module d'échange de gaz (2), qui sont disposés l'un derrière l'autre dans le sens d'écoulement de l'eau (11),
dans laquelle l'eau (11) est, dans le module de dégazage (11), dégazée par passage de gaz indésirables dissous dans l'eau dans une phase gazeuse sur l'autre côté de la membrane et/ou dans l'unité de ruissellement (10) par passage de gaz indésirables dissous dans l'eau dans une phase gazeuse, et l'eau dégazée absorbe, dans l'unité d'échange de gaz (2), les gaz indésirables provenant du gaz naturel contenant du méthane et qui lui est amené, par passage des gaz indésirables dans la phase aqueuse sur l'autre côté de la membrane, et
dans laquelle le gaz naturel amené est amené au ou aux modules d'échange de gaz (2) à contrecourant avec l'eau dégazée (11),
**caractérisée**
**en ce que** l'eau (11) envoyée dans le circuit d'eau est une eau dessalée, ayant une conductibilité inférieure à 500 µS/cm.

2. Installation selon la revendication 1, **caractérisée en ce qu'**au moins chacun d'un module de dégazage (1) et du ou des modules d'échange de gaz (2) comprend une membrane de dégazage à fibres creuses.

3. Installation selon la revendication 1 ou 2, **caractérisée en ce que** l'installation comprend en outre au moins un réservoir d'eau (3), qui est disposé en amont du module de dégazage (1) et/ou en aval de l'unité de ruissellement (10), et met à la disposition du circuit d'eau l'eau dessalée (11).

4. Installation selon l'une des revendications 1 à 3, **caractérisée en ce que** l'installation comprend en outre au moins une pompe à vide (6), qui applique un vide au module de dégazage (1).

5. Installation selon l'une des revendications 1 à 4, **caractérisée en ce que** l'installation comprend en outre au moins un dispositif de désulfuration (7), qui est disposé en amont du module d'échange de gaz (2), le dispositif de désulfuration (7) étant de préférence un filtre à charbon actif.

6. Installation selon l'une des revendications 1 à 5, **caractérisée en ce que** l'installation comprend en outre au moins un compresseur (9), qui comprime le gaz naturel contenant du méthane à préparer, et qui de préférence est disposé en amont du module d'échange de gaz (2), et qui de préférence est en liaison fonctionnelle avec un appareil de mesure de la pression du gaz naturel.

7. Installation selon l'une des revendications 1 à 6, **caractérisée en ce qu'**en amont du module de dégazage (1) est installée au moins une installation de dessalement, qui de préférence est mobile, et qui de préférence se trouve en amont du réservoir d'eau (3).

8. Installation selon l'une des revendications 1 à 7, **caractérisée en ce que** le ou les modules de dégazage (1) et/ou la ou les unités de ruissellement (10), et le ou les modules d'échange de gaz (2), sont spatialement séparés.

9. Installation selon l'une des revendications 1 à 8, **caractérisée en ce qu'**en amont du ou des modules de dégazage (1) est disposée au moins une unité de ruissellement (10), qui en outre soutire les gaz dissous dans l'eau avant le dégazage de l'eau (11) dans le module de dégazage (1).

10. Utilisation de l'installation selon les revendications 1 à 9 pour préparer un gaz naturel contenant du méthane.

11. Procédé de préparation de gaz naturel contenant du méthane, comprenant les étapes:
a) dégazage de l'eau (11) sur au moins un module de dégazage (1) comprenant une membrane imperméable à l'eau et perméable aux gaz, par passage dans une phase gazeuse de gaz indésirables dissous dans l'eau sur l'autre côté de la membrane, et/ou au moins une unité de ruissellement (10),
l'eau étant au préalable dessalée, et la conductibilité de l'eau dessalée étant inférieure à 500 µS/cm, et
b) échange des gaz de l'eau dégazée (11) de l'étape a) sur au moins un module d'échange des gaz (2) comprenant une membrane imperméable à l'eau et perméable aux gaz,
les gaz indésirables contenus dans le gaz naturel contenant du méthane tel qu'amené, passant, dans le module d'échange des gaz (2), de la phase gazeuse du gaz naturel sur un côté de la membrane à la phase aqueuse de l'eau dégazée (11) sur l'autre côté de la membrane,
les étapes a) et b) étant mises en oeuvre l'une derrière l'autre, le module de dégazage (1) et/ou l'unité de ruissellement (10) de l'étape a) et le module d'échange des gaz (2) de l'étape b) étant reliés dans un circuit d'eau, et étant disposés l'un derrière l'autre dans le sens de l'écoulement de l'eau (11),
le gaz naturel contenant du méthane étant amené au ou aux modules d'échange des gaz (2) à contrecourant par rapport à l'eau dégazée.

12. Procédé selon la revendication 11, **caractérisé en ce que** la conductibilité de l'eau dessalée est inférieure à 400 µS/cm, de préférence inférieure à 300 µS/cm.

13. Procédé selon la revendication 12, **caractérisé en ce que** la dureté de l'eau dessalée est inférieure à 0,2 °dH, de préférence inférieure à 0,1 °dH, et d'une manière particulièrement préférée inférieure à 0,05 °dH.

14. Procédé selon l'une des revendications 11 à 13, **caractérisé en ce que** les gaz indésirables éliminés du gaz naturel contenant du méthane dans l'étape b) comprennent du sulfure d'hydrogène (H2S) et du dioxyde de carbone (CO2) .

15. Procédé selon l'une des revendications 11 à 14, **caractérisé en ce que** la teneur en méthane du gaz naturel préparé est après l'étape b) supérieure à 80 %, de préférence supérieure à 85 %, d'une manière encore plus préférée supérieure à 90 %, d'une manière particulièrement préférée supérieure à 95 % et d'une manière tout particulièrement préférée supérieure à 98 %.

16. Procédé selon l'une des revendications 11 à 15, **caractérisé en ce que** le gaz naturel contenant du méthane est séché, et désulfuré, et/ou comprimé dans l'étape b), avant de pénétrer dans le module d'échange des gaz (2), de préférence grâce à au moins un condenseur pour le séchage (8) et à au moins un dispositif de désulfuration (7) et/ou à au moins un compresseur (9).

17. Procédé selon l'une des revendications 11 à 16, **caractérisé en ce que** les étapes a) et b) sont mises en oeuvre d'une manière spatialement séparée.

18. Procédé selon l'une des revendications 11 à 17, **caractérisé en ce que** le gaz naturel préparé (gaz méthane) est séché après l'étape b) avant de quitter l'installation.

19. Procédé selon l'une des revendications 11 à 18, **caractérisé en ce qu'**il est mis en oeuvre dans l'installation selon l'une ou plusieurs des revendications 1 à 9.

20. Procédé selon l'une des revendications 11 à 19, **caractérisé en ce que** le dégazage et de l'eau (11) sur au moins un module de dégazage (1) dans l'étape a) est précédé d'une étape de dégazage supplémentaire sur au moins une unité de ruissellement (10), qui en outre soutire les gaz dissous dans l'eau avant le dégazage de l'eau dans le module de dégazage (1).
